(19) Europäisches Patentamt
European Patent Office
Office européen des brevets

(11) Veröffentlichungsnummer: **0 057 159**
**B1**

(12) **EUROPÄISCHE PATENTSCHRIFT**

(45) Veröffentlichungstag der Patentschrift: **21.08.85**

(51) Int. Cl.⁴: **C 09 B 44/02**, D 06 P 1/41, D 21 H 3/80

(21) Anmeldenummer: **82810019.8**

(22) Anmeldetag: **18.01.82**

(54) **Azofarbstoffe.**

(30) Priorität: **23.01.81 CH 436/81**

(43) Veröffentlichungstag der Anmeldung: **04.08.82 Patentblatt 82/31**

(45) Bekanntmachung des Hinweises auf die Patenterteilung: **21.08.85 Patentblatt 85/34**

(84) Benannte Vertragsstaaten: **CH DE FR GB LI**

(56) Entgegenhaltungen:
**EP - A - 0 014 677**
**EP - A - 0 015 233**
**FR - A - 1 396 903**
**FR - A - 2 147 281**
**GB - A - 1 338 250**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Postfach, CH-4002 Basel (CH)**

(72) Erfinder: **Adam, Jean-Marie, Dr., 3, Rue de Montreux, F-68300 Saint-Louis (FR)**

**EP 0 057 159 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft neue, gegebenenfalls quaternierte, basische Azofarbstoffe, Verfahren zu deren Herstellung und deren Verwendung zum Färben und Bedrucken von Textilmaterialien, Papier und Leder, sowie zur Bereitung von Tinten.

Die neuen Azofarbstoffe sind von Sulfonsäuregruppen freie, metallfreie oder metallhaltige Azofarbstoffe der Formel II

$$(X - N = N - Y - N = N - X)\!-\!(CH_2 - NH - CO - W - Q)_n \qquad (II)$$

worin bedeuten:

X unabhängig voneinander eine Kupplungskomponente der Formel

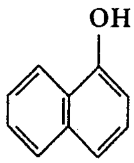
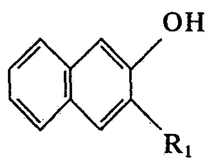
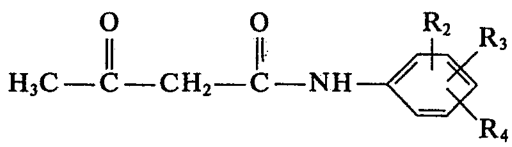

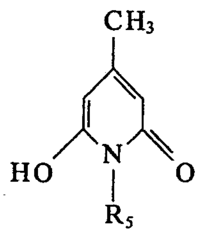
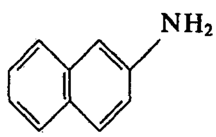
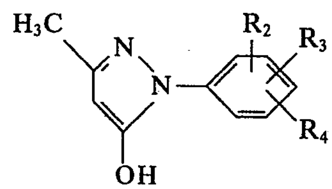

oder 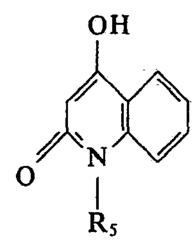

wobei die Substituenten $R_1$ bis $R_5$ die folgende Bedeutung haben:

$R_1$ Wasserstoff oder ein Rest der Formel

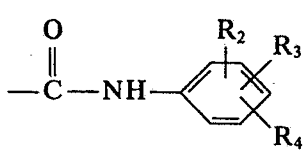 oder 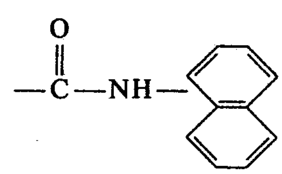

$R_2$, $R_3$ und $R_4$ Wasserstoff, Alkyl ($C_1 - C_4$), Alkoxy ($C_1 - C_4$), Phenoxy, Halogen, CN, $NO_2$ oder ein heterocyclischer Rest und

$R_5$ Wasserstoff, Phenyl oder Alkyl ($C_1 - C_4$), gegebenenfalls substituiert durch Hydroxy oder Phenyl; und

Y ein zweiwertiges Brückenglied der Formel

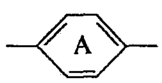
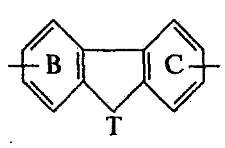 (mit M gleich N, S, O oder $CH_2$)

[H, Alkyl ($C_1 - C_4$), Alkylcarbonyl ($C_1 - C_4$)]

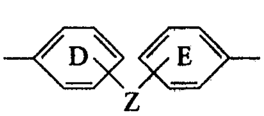 oder 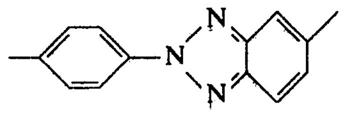

worin die Phenylreste A bis E ein oder mehrmals durch Alkyl ($C_1 - C_4$), Alkoxy ($C_1 - C_4$), Phenoxy, CN, Halogen, Nitro, OH oder COOH substituiert sein können, wobei die Anzahl an Carboxylgruppen kleiner ist, als die Zahl für n, Z die direkte Bindung oder einen zweiwertigen Rest

W eine Alkylengruppe mit 1 bis 3 C-Atomen oder eine Gruppe der Formel

$- NH(CH_2)_{1-3} -$,

Q einen basischen oder quaternierten Aminorest der Formel

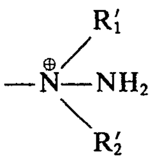 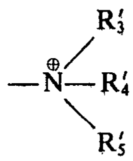 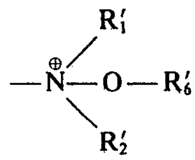 oder 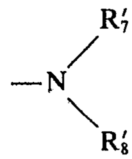

worin bedeutet

$R_1'$ bis $R_4'$ unabhängig voneinander einen Alkylrest ($C_1 - C_4$), der gegebenenfalls durch eine Hydroxylgruppe substituiert ist,

$R_5'$ und $R_6'$ unabhängig voneinander einen Alkylrest ($C_1 - C_4$),

$R_7'$ Wasserstoff, Alkyl ($C_1 - C_4$) gegebenenfalls durch Hydroxyl substituiert, Cyclohexyl gegebenenfalls durch 1 bis 3 Methylgruppen substituiert oder einen Phenylrest,

$R_8'$ Alkyl ($C_1 - C_4$) gegebenenfalls durch Hydroxyl substituiert, oder die Reste $R_1'$ oder $R_2'$ oder die Reste $R_3'$ und $R_4'$ oder die Reste $R_7'$ und $R_8'$ bilden zusammen mit dem gemeinsamen N-Atom einen Pyrrolidin-, Piperidin-, Morpholin- oder Piperazinring und die Reste $R_3'$, $R_4'$ und $R_5'$ mit dem gemeinsamen N-Atom einen Pyridiniumring oder einen 1,4-Diazabicyclo[2.2.2]-octanrest und

n die Zahlen 1 bis 4 und

für den Fall, daß Q eine quaternäre Aminogruppe ist, die anorganischen und organischen Salze hiervon.

Handelt es sich um einen quaternären Hydrazinrest der Formel

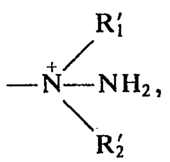

so bedeuten die Reste $R_1'$ und $R_2'$ unabhängig voneinander Alkylreste mit 1 bis 4 C-Atomen. Die Alkylreste können gegebenenfalls durch eine Hydroxylgruppe substituiert sein oder mit dem gemeinsamen Stickstoffatom einen Pyrrolidin-, Piperidin-, Morpholin- oder Piperazinring bilden. Beispielsweise kommen die folgenden Reste in Frage:

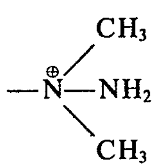 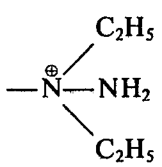 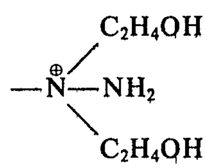

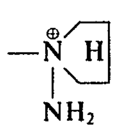 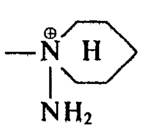 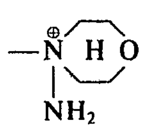 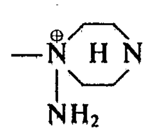

Hat Q die Bedeutung einer quaternären Aminogruppe der Formel

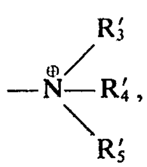

so bedeuten die Reste $R'_3$, $R'_4$ und $R'_5$ unabhängig voneinander einen Alkylrest mit 1 bis 4 C-Atomen, wobei die Reste $R'_3$ und $R'_4$ noch durch eine Hydroxylgruppe weitersubstituiert sein können. Die Reste $R'_3$ und $R'_4$ können ebenfalls mit dem gemeinsamen N-Atom einen Pyrrolidin-, Piperidin-, Morpholin- oder Piperazinring bilden, und weiterhin können die Reste $R'_3$, $R'_4$ und $R'_5$ mit dem gemeinsamen N-Atom einen Pyridinium- oder einen 1,4-Diazabicyclo[2.2.2]-octanrest bilden.

Als quaternäre Aminogruppen kommen in Frage

$-\overset{\oplus}{N}(CH_3)_3$ $-\overset{\oplus}{N}(C_2H_4OH)_3$ 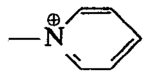 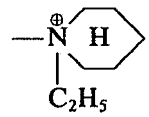

$-\overset{\oplus}{N}(C_2H_5)_3$ 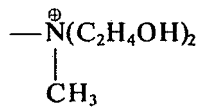 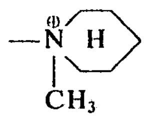 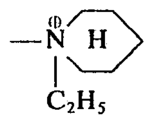

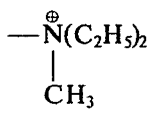 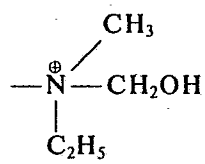 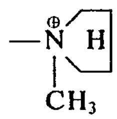 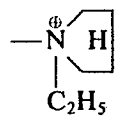

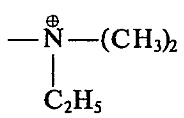 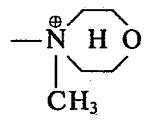

Bedeutet der Rest Q einen quaternären Hydroxylaminorest der Formel

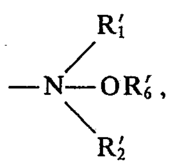

so haben die Reste $R'_1$ und $R'_2$ die bereits angegebene Bedeutung. Der Rest $R'_6$ ist ein Alkylrest mit 1 bis 4 C-Atomen. Die folgenden quaternären Hydroxylaminoderivate sind beispielsweise genannt:

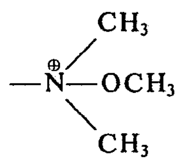 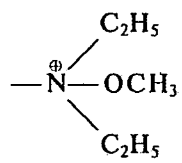 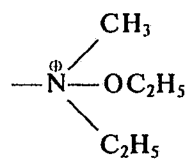

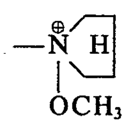 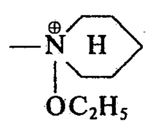 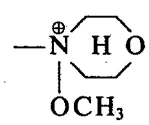 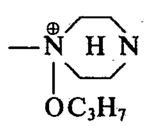

Schließlich bedeutet der Rest Q eine sek. oder tert.Aminogruppe der Formel

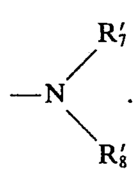 .

Die Reste $R'_7$ und $R'_8$ sind Alkyl mit 1 bis 4 Kohlenstoffatomen, dabei kann der Alkylrest noch durch eine Hydroxylgruppe weitersubstituiert sein. Weiterhin hat der Rest $R'_7$ die Bedeutung von Wasserstoff oder eines gegebenenfalls durch 1 bis 3 Methylgruppen substituierten Cyclohexylrestes oder eines Phenylrestes. Schließlich können die Reste $R'_7$ und $R'_8$ mit dem gemeinsamen N-Atom einen Pyrrolidin-, Piperidin-, Morpholin- oder Piperazinring bilden. Als sek. oder tert.-Aminogruppen seien beispielsweise genannt:

$—N—(CH_3)_2$

$—N—(C_2H_5)_2$

$—NH—CH_3$

$—NH—C_3H_7$

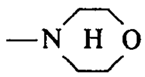

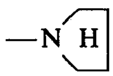

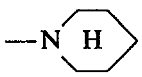

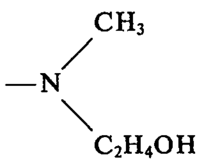

$—N—(C_2H_4OH)_2$

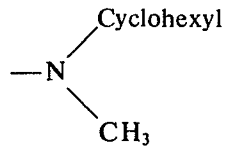

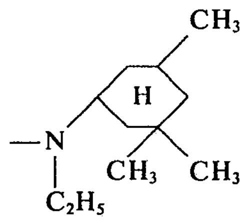

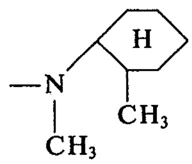

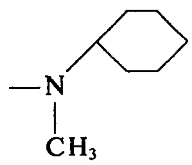

In den bevorzugten Azofarbstoffen der Formel II bedeutet n die Zahl 2 und Q hat die Bedeutung einer quaternären Aminogruppe, insbesondere eines Pyridiniumrestes.

Bedeutet Q eine quaternäre Aminogruppe, so liegen die Azofarbstoffe der Formel II in Form ihrer anorganischen oder organischen Salze vor.

Als Gegenion kommen sowohl anorganische wie organische Anionen in Frage; beispielsweise sind genannt: Halogenid-, wie Chlorid-, Bromid- oder Jodid-, Sulfat-, Methylsulfat-, Aminosulfonat-, Perchlorat-, Carbonat-, Bicarbonat-, Phosphat-, Phosphormolybdat-, Phosphorwolframat-, Phosphorwolframmolybdat-, Benzolsulfonat-, Naphthalinsulfonat-, 4-Chlorbenzolsulfonat-, Oxalat-, Maleinat-, Acetat-, Propionat-, Lactat-, Succinat-, Chloracetat-, Tartrat-, Methansulfonat- oder Benzoationen, oder komplexe Anionen, wie das von Chlorzinkdoppelsalzen.

Bevorzugte Anionen sind in Abhängigkeit von der Verwendungsart der Verbindungen: z. B. das Acetat- und Chlorid-ion (für Textil- und Papiermaterialien); und das Chlorid-ion für die Tintenbereitung.

Das Symbol Z bedeutet die direkte Bindung oder einen zweiwertigen Rest, vor allem einen solchen der Formel:

$SO_2—NH—$

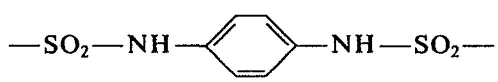

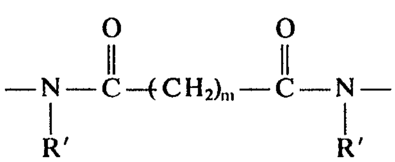

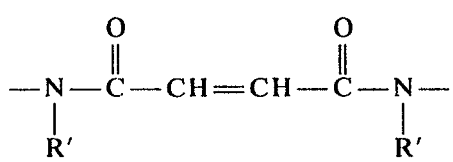

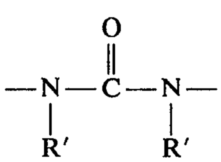

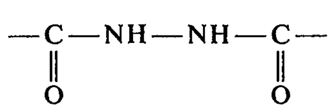

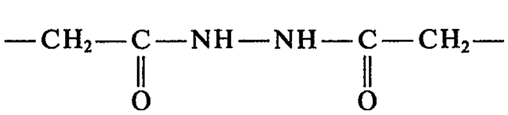

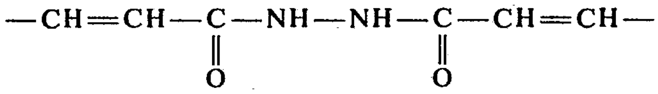

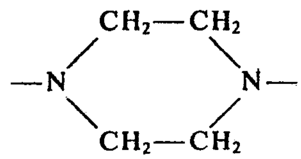

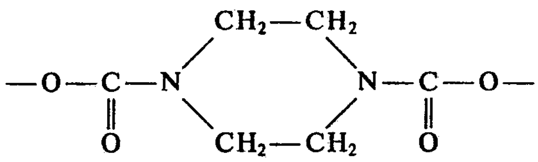

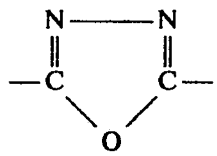

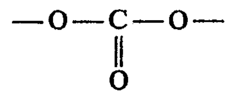

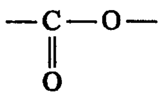

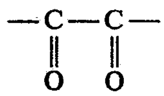

$-O(CH_2)_m-O-$

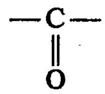

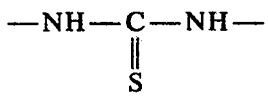

$-S-$ $-O-$ $-CH{=}CH-$ $-S-S-$

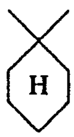

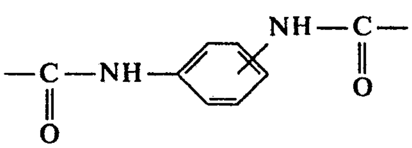

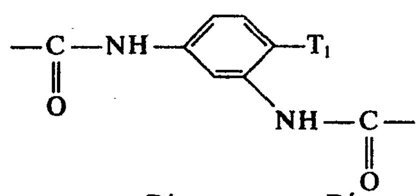

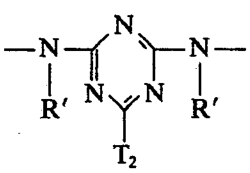

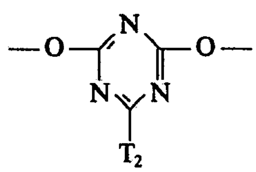

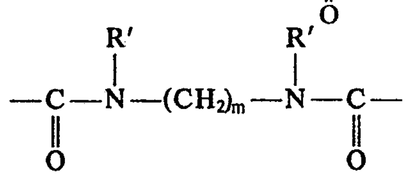

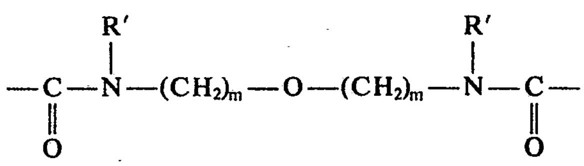

$-(CH_2)_m-$

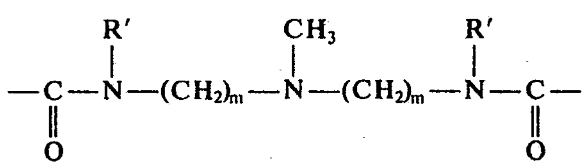

oder

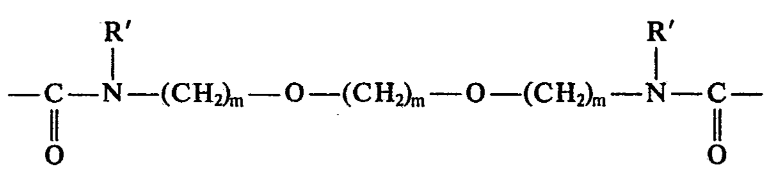

und insbesondere ein Rest der Formel

$-SO_2-$ $-NH-$

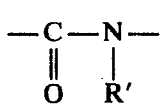

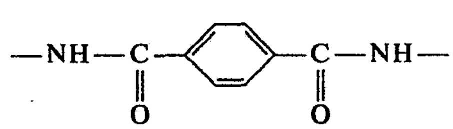

$-N{=}N-$ oder $-NH-CO-NH-$

Der Rest R′ bedeutet Wasserstoff oder einen Alkylrest mit 1 bis 4 C-Atomen. $T_1$ ist ein Halogenatom wie Fluor, Chlor oder Brom, ein Alkylrest mit 1 bis 4 C-Atomen oder ein Alkoxyrest mit 1 bis 4 C-Atomen. $T_2$ ist ein Halogenatom wie Fluor, Chlor oder Brom, oder ein Rest der Formel

$-NHCH_2CH_2OH$ oder $-N(CH_2CH_2OH)_2$.

Der Index m ist gleich 1, 2, 3 oder 4.

$R_2$, $R_3$, $R_4$ oder $R_5$ in der Bedeutung eines Alkylrestes ($C_1 - C_4$) stellen einen verzweigten oder unverzweigten Alkylrest, wie den n- und iso-Propyl-, den n-, sek.- oder tert.-Butylrest, insbesondere jedoch den Methyl- und Äthylrest, dar. $R_2$, $R_3$ und $R_4$ in der Bedeutung eines Alkoxyrestes ($C_1 - C_4$) stellen einen verzweigten oder unverzweigten Alkoxyrest, wie den Äthoxy-, n- oder iso-Propoxy-, den n-, sek.- oder tert.-Butoxyrest, insbesondere den Methoxyrest dar. Bedeuten die Reste $R_2$, $R_3$ und $R_4$ ein Halogenatom, so handelt es sich um ein Fluor-, Chlor- oder Bromatom, bedeuten sie einen heterocyclischen Rest, so handelt es sich um den Benzimidazol-, Benzoxazol- und besonders den Benzthiazolrest, wobei der Benzolkern dieser Reste methyliert sein kann.

Enthalten die Azofarbstoffe in den Positionen ortho zur Azogruppe metallisierbare Gruppierungen, z. B. Hydroxy- oder Carboxygruppen, so können die Azofarbstoffe der Formel II metallhaltig sein, wobei als komplexgebundene Metalle, z. B. die folgenden in Frage kommen: Kupfer, Chrom, Kobalt, Eisen oder Nickel; von diesen ist das Kupfer bevorzugt.

In bevorzugten Azofarbstoffen der Formel II hat das zweiwertige Brückenglied Y die Formel

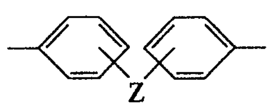

wobei Z die angegebene Bedeutung hat.

Weiterhin sind die bevorzugten Azofarbstoffe der Formel II dadurch charakterisiert, daß beide Symbole X für eine Kupplungskomponente der Formel

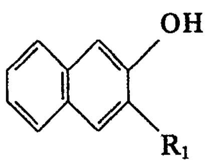

stehen, in der der Rest $R_1$ die bereits angegebene Bedeutung hat.

Die Herstellung der Azofarbstoffe der Formel II erfolgt nach bekannter Art und Weise. Eine Möglichkeit besteht darin, daß man z. B.

a) in einen von Sulfonsäuregruppen freien gegebenenfalls metallisierbaren Azofarbstoff

$[X - N = N - Y - N = N - X ]\!- H_n$

ein- bis viermal die Gruppe der Formel

$- CH_2NHCO - W - Q'$

einführt, worin Q′ eine sek.- oder tert.-Aminogruppe bedeutet, die man gegebenenfalls quaterniert, wobei das Symbol W die unter Formel II angegebene Bedeutung hat, und den gegebenenfalls quaternierten Azofarbstoff gegebenenfalls in einen Metallkomplexfarbstoff überführt;

b) in einen Sulfonsäuregruppen freien, gegebenenfalls metallisierbaren Azofarbstoff

$[X - N = N - Y - N = N - X ]\!- H_n$

ein- bis viermal die Gruppe der Formel

$- CH_2NHCO - W - U$

einführt und so zur Azoverbindung der Formel III gelangt

$[X - N = N - Y - N = N - X ]\!-( CH_2NHCO - W - U)_n$ (III)

worin U ein in ein Anion überführbarer Rest ist, der anschließend gegen den Aminorest Q substituiert wird, den man gegebenenfalls quaterniert, wobei die Symbole X, Y, W und n und der Rest Q

die unter Formel II angegebene Bedeutung haben, und den gegebenenfalls quaternierten Azofarbstoff gegebenenfalls in einen Metallkomplexfarbstoff überführt; oder

c) in die Kupplungskomponente der Formel H – X die Gruppe der Formel

$$-CH_2NHCO-W-Q'$$

einführt, in der W die unter Formel II angegebene Bedeutung hat und Q' eine sek.- oder tert.-Aminogruppe ist, dabei die Kupplungskomponente der Formel

$$X-CH_2NHCO-W-Q'$$

erhält, die man mit einem tetrazotierten Diamin der Formel

$$H_2N-Y-NH_2$$

kuppelt, wobei die Symbole X und Y die unter Formel II angegebene Bedeutung haben, und den so erhaltenen Azofarbstoff gegebenenfalls quaterniert, und sofern im Molekül zur Komplexbildung befähigte Gruppen vorhanden sind, gegebenenfalls metallisiert.

Die Gruppe der Formel

$-CH_2NHCO-W-Q'$ bzw. $-CH_2NHCO-W-U$

wird ausgehend von dem entsprechenden Methylolamid mit Hilfe der Einhornreaktion in den Azofarbstoff eingeführt – siehe dazu Angew. Chem. 69, 463 (1957). Man arbeitet dabei in Gegenwart von konz. Schwefelsäure oder Phosphorsäure, gegebenenfalls zusammen mit Phosphorpentoxid, bei einer Temperatur von etwa 0–50°C, vorzugsweise bei Raumtemperatur. – Bei Einführen der Gruppe

$$-CH_2NHCO-W-Q'$$

in die Kupplungskomponente der Formel

$$H-X$$

geht man analog vor.

Hat man so die Gruppe der Formel

$$-CH_2NHCO-W-U$$

in den Azofarbstoff eingeführt, so erhält man ein Zwischenprodukt der Formel III.

Durch nachfolgende Umsetzung mit einem sek. oder tert.-Amin, wie Dimethylamin oder trimethylamin oder mit Pyridin läßt sich der Rest U, vorzugsweise ein Halogenatom, wie ein Chlor-, Brom- oder Jodatom, gegen den entsprechenden Aminorest Q substituieren und man erhält die Azofarbstoffe der Formel II. Azofarbstoffe der Formel II, in denen Q eine tertiäre Aminogruppe darstellt, können schließlich noch quaterniert werden. Die Quaternierung erfolgt dabei nach bekannter Art und Weise z. B. in einem inerten Lösungsmittel wie Chlorbenzol, oder gegebenenfalls in wäßriger Suspension oder ohne Lösungsmittel in einem Überschuß des Quaternierungsmittels bei einer Temperatur von ca. 20 bis 120°C.

Geeignete Quaternierungsmittel sind z. B. Alkylhalogenide, wie Methyl- oder Äthylchlorid, Methyl-, Äthyl- oder Butylbromid oder Methyl- oder Äthyljodid, vor allem Alkylsulfate, wie Dimethyl-, Diäthyl- und Dibutylsulfat, oder Benzylchlorid, Chloressigsäureamid, Acrylsäureester, Epoxide, wie Äthylenoxid, Epichlorhydrin, Alkylester von aromatischen Sulfonsäuren, wie Methyl-p-toluolsulfonat, Methylbenzolsulfonat, sowie die Propyl- und Butylester von Benzolsulfonsäure.

Die neuen Azofarbstoffe der Formel II färben Textilmaterialien und Papier in brillanten Rot- und Blaunuancen, dabei zeichnen sie sich durch ihre Unempfindlichkeit auf Wasserhärtegrade und hohe Affinität vor allem für Cellulosematerialien aus. Verwenden lassen sich die Farbstoffe der Formel II zum Färben und Bedrucken von Textilmaterialien, Papier und Leder, sowie zur Herstellung von Tinten.

Dienen diese Farbstoffe zum Färben und Bedrucken von Textilmaterialien, so kommen als solche Wolle, Seide und sauer modifizierte Polyamidmaterialien, sowie Polyacrylnitrilmaterialien, vor allem Naßkabel, und basisch färbbares, modifiziertes Polyestermaterial in Frage. Vor allem kommen jedoch natürliche und regenerierte Cellulosematerialien, im besonderen Baumwolle und Viscose in Frage, wobei man z. T. brillante rote bis blaue Ausfärbungen erhält. Die erfindungsgemäßen Azofarbstoffe der Formel II haben auf diesen Textilmaterialien vor allem auf den genannten Cellulosematerialien ein gutes Ziehvermögen, einen guten Ausziehgrad und guten Aufbau und die erhaltenen Färbungen weisen gute Echtheiten, vor allem gute Naßechtheiten wie Waschechtheiten auf. Bei den basischen Azofarbstoffen

können die Naßechtheiten wenn nötig, durch eine Insolubilisierung, z. B. durch eine alkalische Nachbehandlung auf der Faser, noch weiter verbessert werden. Darüber hinaus ist es von Vorteil, daß die erfindungsgemäßen Azofarbstoffe der Formel II ohne Vorbehandlung der Cellulosematerialien und ohne zusätzliche Salzzugabe in die Färbeflotte, auf diese Materialien aufziehen.

Eine weitere Verwendung der erfindungsgemäßen Azofarbstoffe der Formel II liegt in der Anwendung zum Färben von Papier aller Arten, vor allem von gebleichtem, ungeleimtem und geleimtem ligninfreiem Papier. Ganz besonders geeignet sind diese Farbstoffe zum Färben von ungeleimtem Papier (Tissues) als Folge ihrer sehr hohen Standard-Affinität zu diesem Substrat.

Die erfindungsgemäßen Azofarbstoffe ziehen sehr gut auf diese Substrate, wobei das Abwasser – auch bei tiefen Nuancen (bis über 1/1 RT = Richttyptiefe) – farblos bleibt, was ein eminenter technischer und ökologischer Vorteil, insbesondere im Hinblick auf die heutigen Abwasser-Gesetze, ist. Der gute Ausziehgrad ist auch für eine gute Reproduzierbarkeit der Nuance von Vorteil. Der Ausziehgrad wird praktisch nicht von der Wasserhärte beeinflußt. Die Färbungen sind naßecht, d. h. sie zeigen keine Neigung zum Ausbluten, wenn gefärbtes Papier in nassem Zustand mit feuchtem weißem Papier in Berührung gebracht wird. Diese Eigenschaft ist besonders für sogenannte »Tissues« erwünscht, bei denen vorhersehbar ist, daß das gefärbte Papier in nassem Zustand (z. B. getränkt mit Wasser, Alkohol, Tensid-Lösung etc.) in Berührung mit anderen Flächen wie Textilien, Papier- und dergleichen kommt, die gegen Verschmutzung geschützt werden müssen.

Die hohe Affinität für Papier und die große Ausziehgeschwindigkeit der erfindungsgemäßen Azofarbstoffe ist für das Kontinue-Färben von Papier von großem Vorteil, und ermöglicht somit einen sehr breiten Einsatz dieses bekannten sehr wirtschaftlichen Verfahrens, das folgende Vorteile aufweist:

a) eine einfachere und schnellere Korrektur der Nuance und deshalb weniger Verlust an nicht Typkonformem Papier (Ausschuß) im Vergleich zur Papiermassefärbung;
b) eine bessere Konstanz der Nuance; (kein »Tailing«) und
c) es erübrigt sich eine gründliche Reinigung der Mischbütte nach jeder Partie, wobei gleichzeitig der Arbeitsprozeß verkürzt und das Verfahren optimiert wird.

Weiter dienen die Azofarbstoffe der Formel II zum Färben von Ledermaterialien nach den verschiedensten Applikationsverfahren, wie Sprühen, Bürsten und Tauchen und zur Bereitung von Tinten aller Art wie für Kugelschreiber und Drucktinten.

Gegenüber den nächstvergleichbaren Monoazo-Farbstoffen der FR-A-1 396 903 weisen die erfindungsgemäßen Disazo-Farbstoffe eine bessere Affinität auf Papier auf.

Gegenüber den bekannten Farbstoffen der GB-A-1 338 250 mit identischem Chromophor zu den anmeldungsgemäßen Chromophoren und isomeren Brücken zwischen dem Chromophor und dem ternären oder quaternären N-Atom weisen die erfindungsgemäßen Farbstoffe vor allem im Bereich tiefer Nuancen ebenfalls einen höheren Ausziehgrad auf.

Die folgenden Beispiele veranschaulichen die Erfindung, ohne sie darauf zu limitieren. Die Temperaturen sind in Grad Celsius angegeben, Teile (T) bedeuten Gewichtsteile und %-Angaben sind Gewichtsprozente.

Beispiel 1

Eine Mischung von 53,8 T der Farbbase der Formel

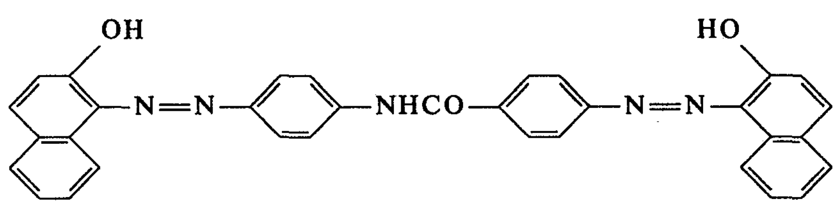

und 28,6 T N-Methylolchloracetamid wird in 500 T konz. Schwefelsäure bei 0–5° gelöst. Die Lösung wird dann während 15 Stunden bei 0–5° gerührt. Man gießt diese Lösung auf Eis, wobei das Reaktionsprodukt ausfällt; anschließend wird abfiltriert und mit Wasser neutral gewaschen. Nach der Trocknung erhält man 37 T der Verbindung der Formel

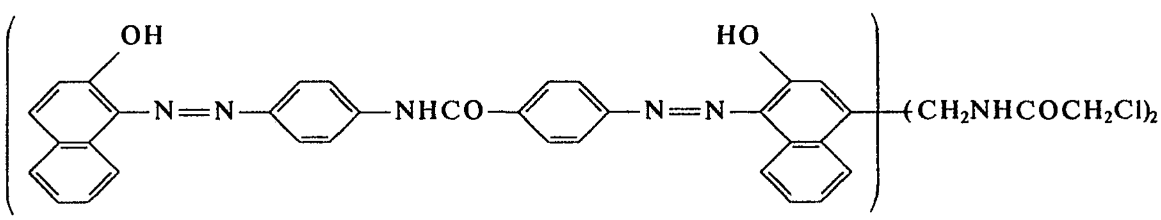

20 T des so erhaltenen Kondensationsproduktes werden in 200 T Pyridin eingetragen und 1 Stunde auf 100° erwärmt. Die kationische Verbindung der Formel

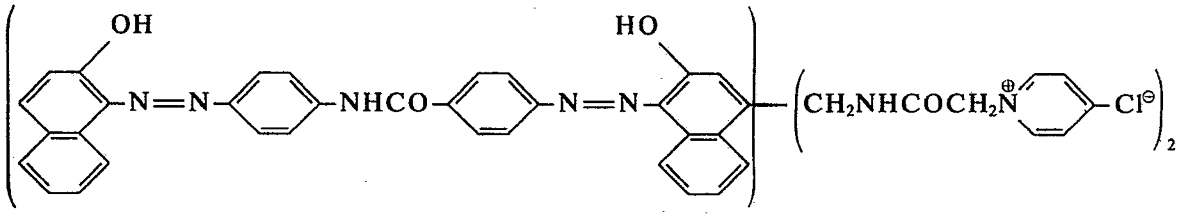

wird abgesaugt und getrocknet. Der Farbstoff zeigt auf Papier ein sehr gutes Ausziehvermögen (Abwasser farblos), wobei brillante rote Färbungen mit guten Naßechtheiten erhalten werden.

Verwendet man im obigen Beispiel bei sonst gleichem Vorgehen entsprechende Teile der in der nachstehenden Tabelle I aufgeführten Farbstoffe, so erhält man kationische Farbstoffe mit ähnlichen guten Eigenschaften.

Tabelle I

| Bei-spiel | Teile | Farbbase | Farbton auf Papier |
|---|---|---|---|
| 2 | 53,8 | 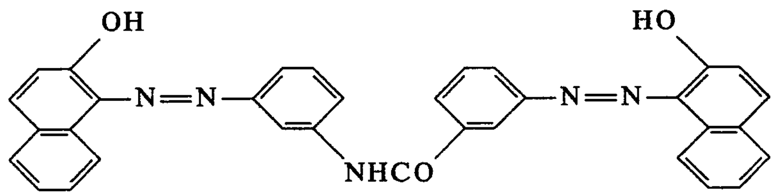 | orange |
| 3 | 53,6 | 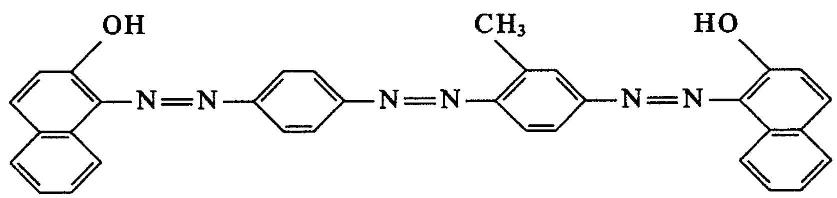 | violett |
| 4 | 53,5 | 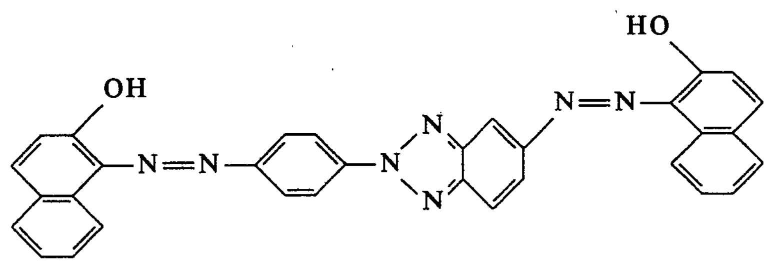 | rot |
| 5 | 63 | 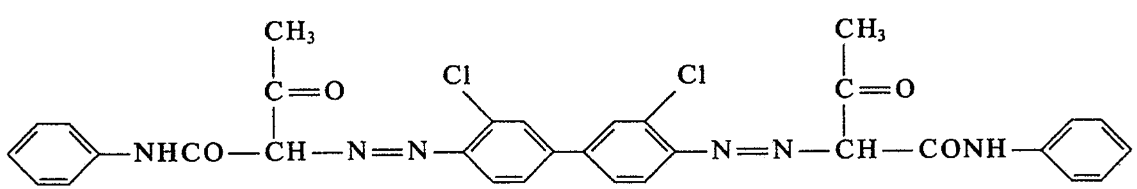 | gelb |

Fortsetzung

| Bei-spiel | Teile | Farbbase | Farbton auf Papier |
|---|---|---|---|
| 6 | 68,6 | 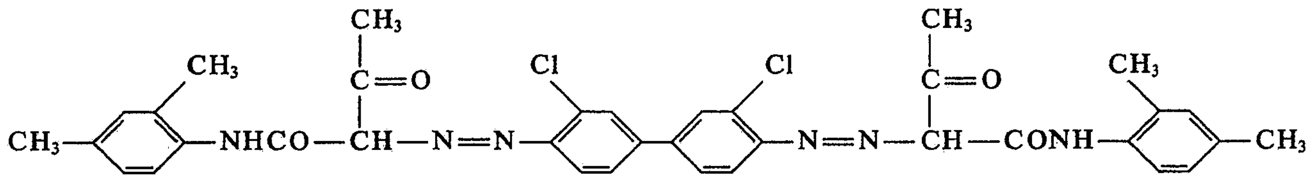 | gelb |
| 7 | 62,4 | 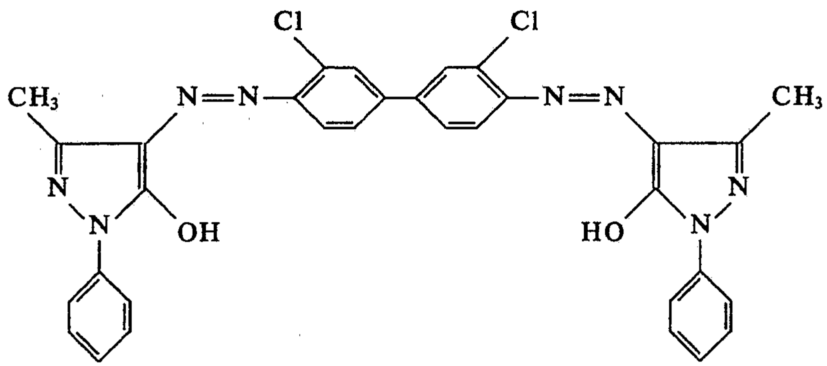 | orange |
| 8 | 65,2 | 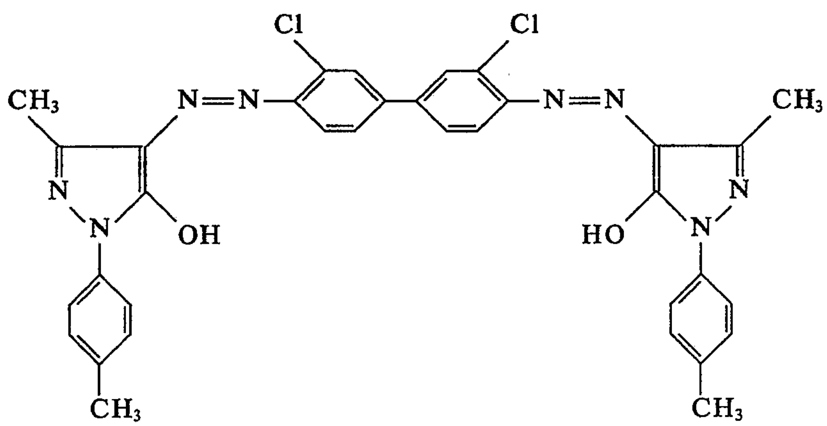 | orange |

Fortsetzung

| Bei-spiel | Teile | Farbbase | Farbton auf Papier |
|---|---|---|---|
| 9 | 59,8 | 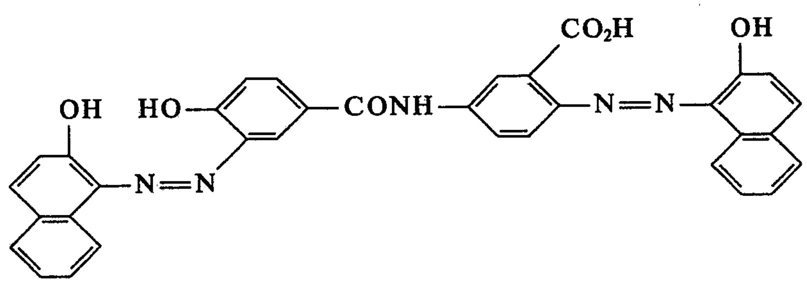 | rot |
| 10 | 55,4 | 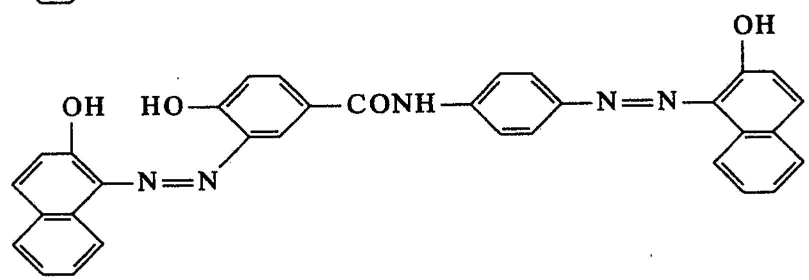 | rot |
| 11 | 50,9 | 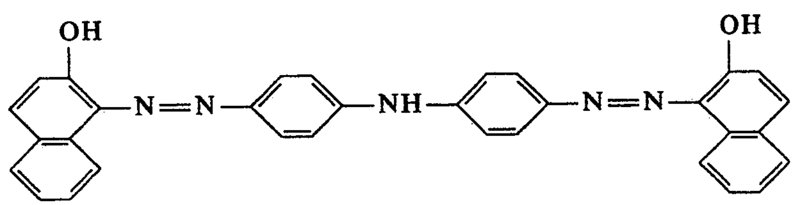 | rotstichig-violett |
| 12 | 67,3 | 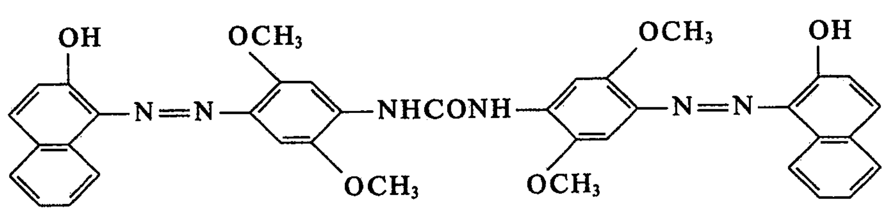 | rotstichig-blau |

Fortsetzung

| Bei-spiel | Teile | Farbbase | Farbton auf Papier |
|---|---|---|---|
| 13 | 57,9 | 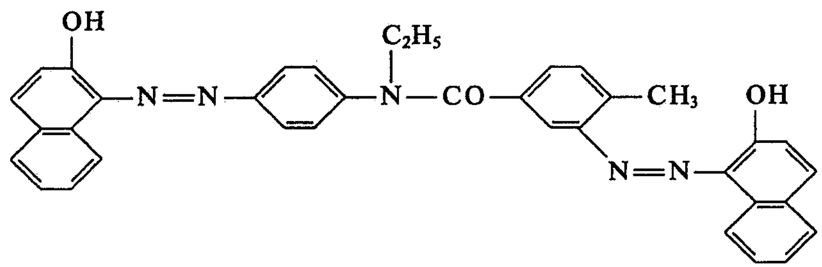 | orange |
| 14 | 61,2 | 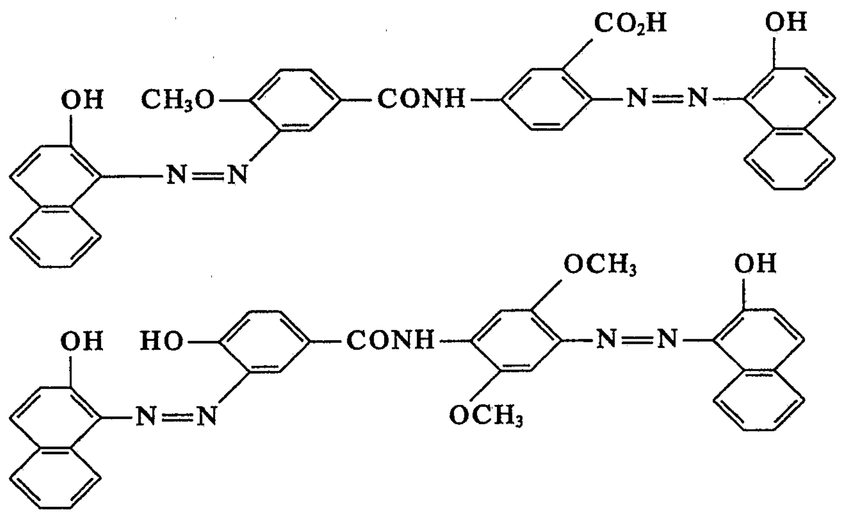 | rot |
| 15 | 61,3 | | violett |
| 16 | 71,7 | 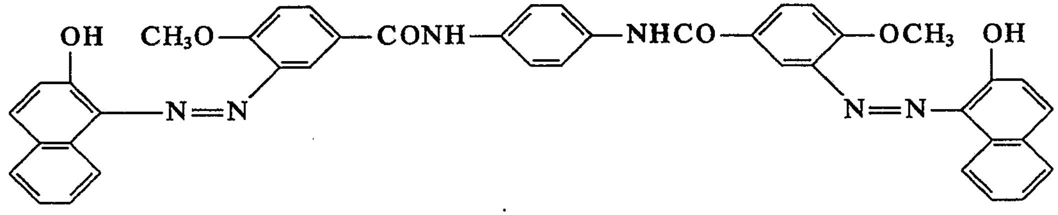 | scharlach |

Fortsetzung

| Bei-spiel | Teile | Farbbase | Farbton auf Papier |
|---|---|---|---|
| 17 | 55,4 | 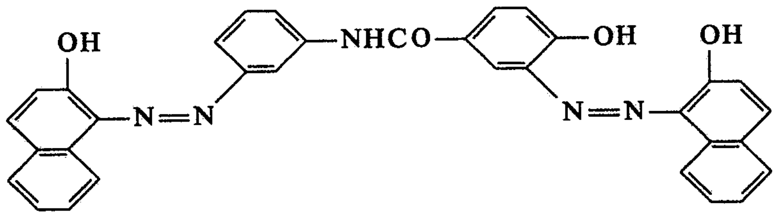 | braun |
| 18 | 59 | 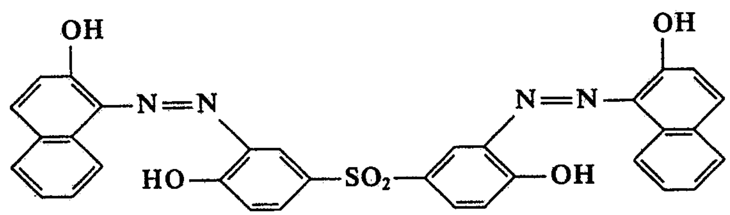 | rot |
| 19 | 87,6 | 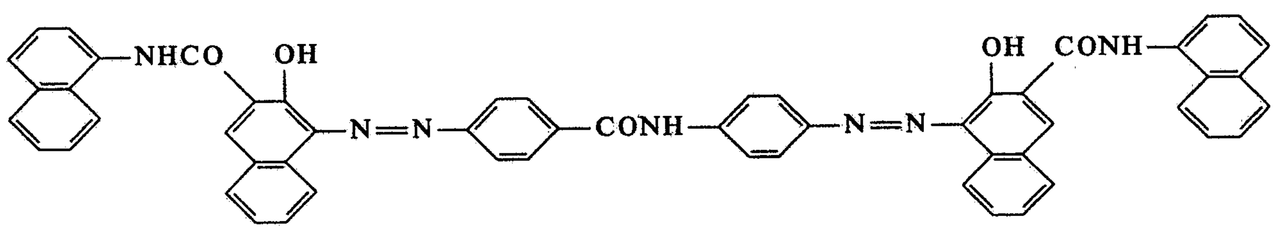 | blaustichig-rot |
| 20 | 87,6 | 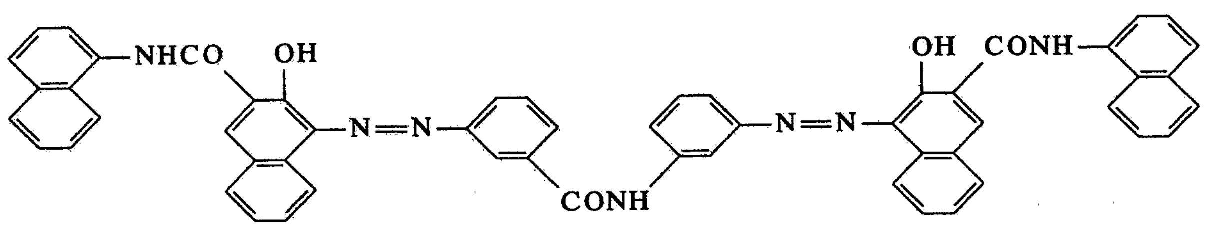 | rot |

Fortsetzung

| Beispiel | Teile | Farbbase | Farbton auf Papier |
|---|---|---|---|
| 21 | 84,8 | 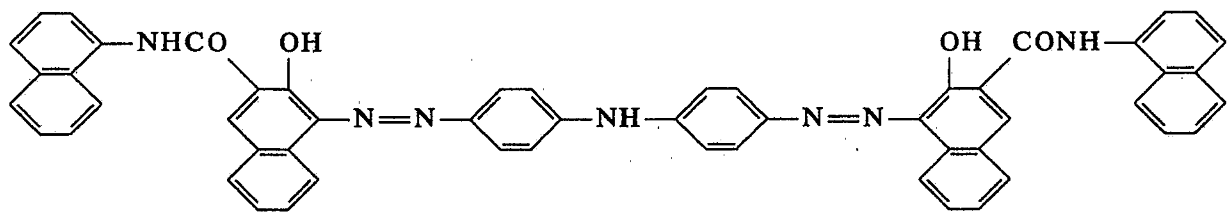 | blau |
| 22 | 77,6 | 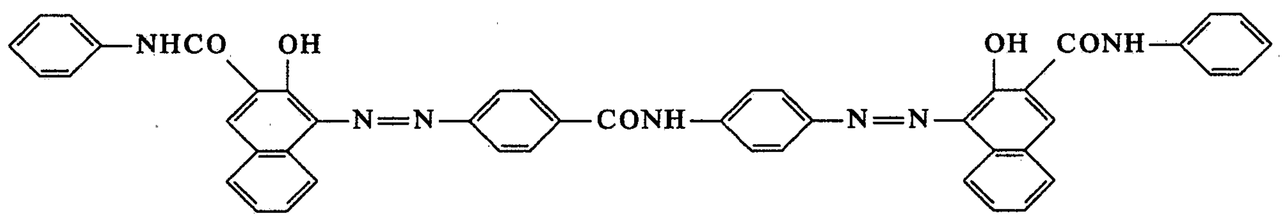 | blaustichig-rot |
| 23 | 77,6 | 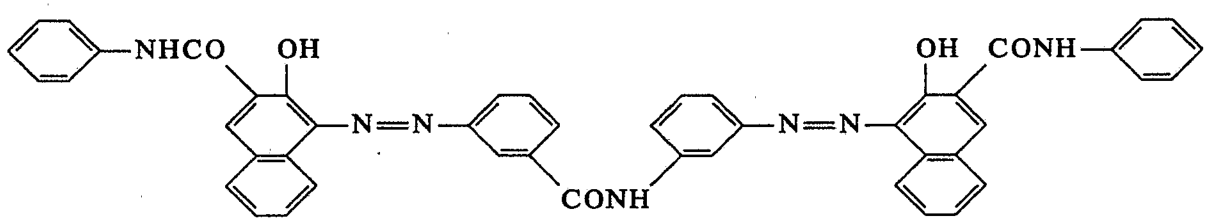 | rot |
| 24 | 74,8 | 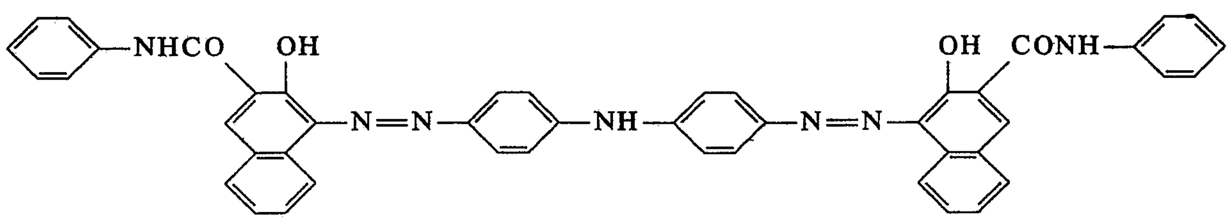 | blau |

Fortsetzung

| Bei-spiel | Teile | Farbbase | Farbton auf Papier |
|---|---|---|---|
| 25 | 83,6 | 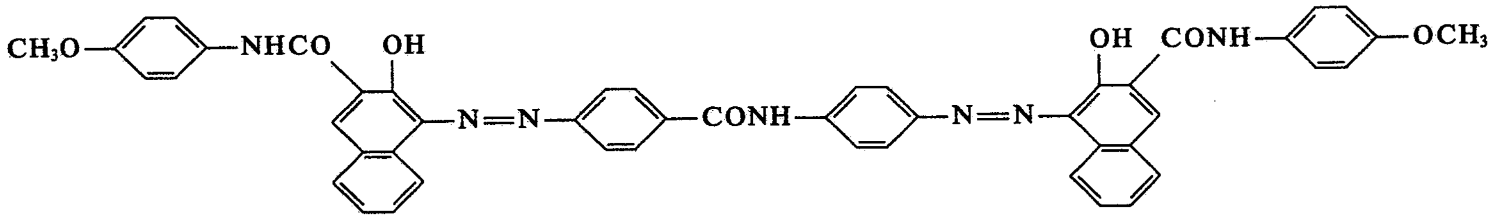 | blaustichig-rot |
| 26 | 83,6 | 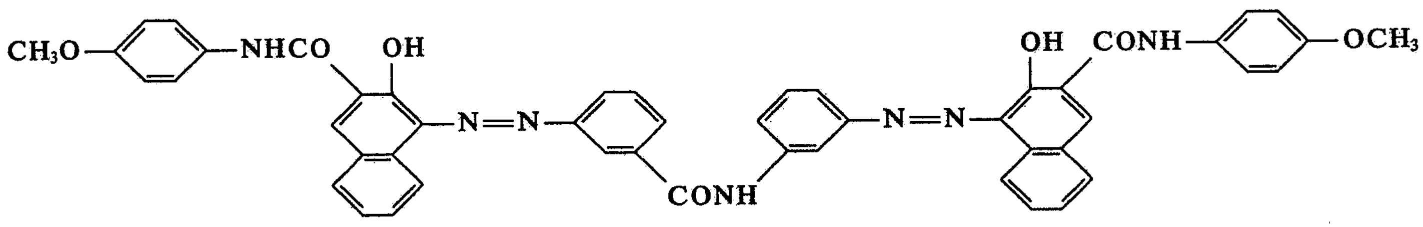 | rot |
| 27 | 80,8 | 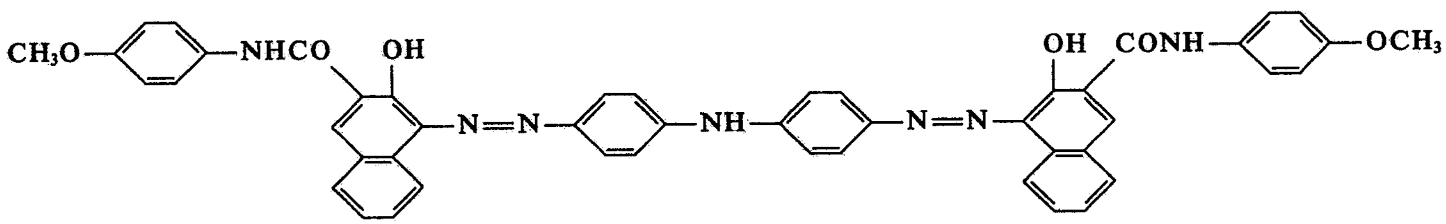 | blau |
| 28 | 108,7 | 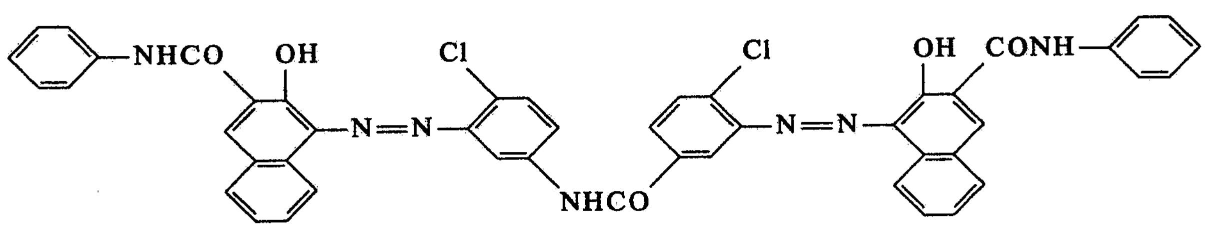 | rot |

Fortsetzung

| Bei-spiel | Teile | Farbbase | Farbton auf Papier |
|---|---|---|---|
| 29 | 52,7 | 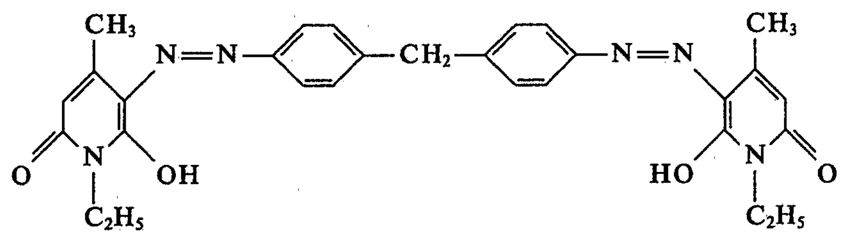 | gelb |
| 30 | 55,5 | 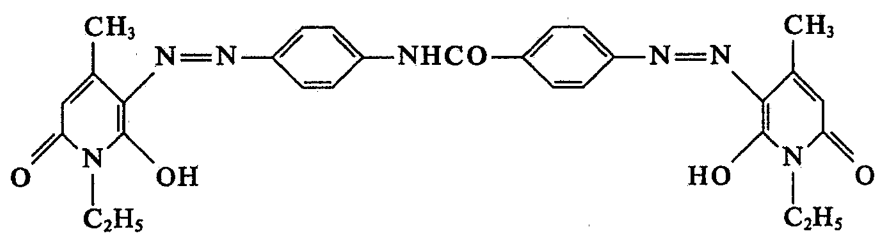 | orange |
| 31 | 55,5 | 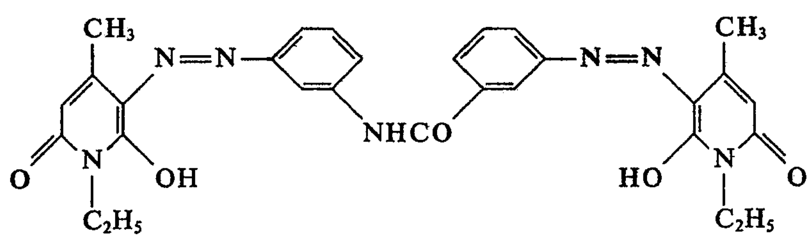 | gelb |

Fortsetzung

| Bei-spiel | Teile | Farbbase | Farbton auf Papier |
|---|---|---|---|
| 32 | 54,7 | 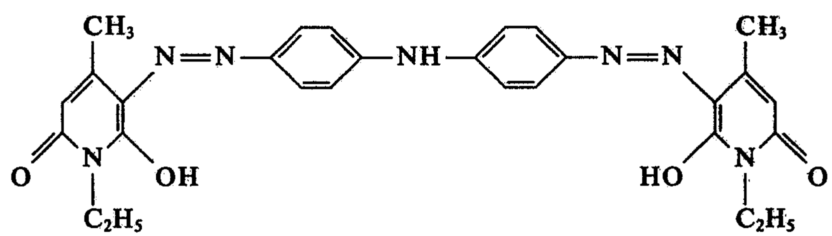 | violett |
| 33 | 55,4 | 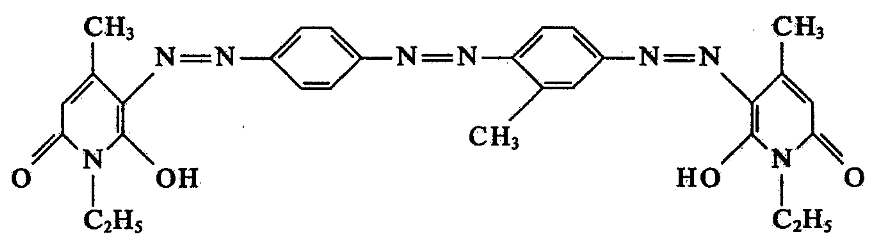 | rot |

## Beispiel 34

18,7 T der Verbindung der Formel

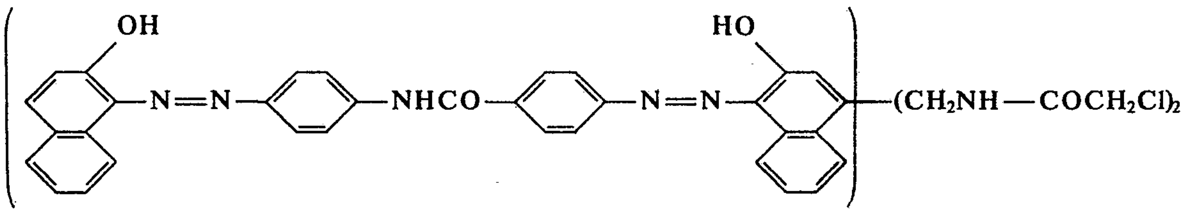

gemäß Beispiel 1 werden in 400 T einer 40%igen wässerigen Dimethylaminlösung 4 Std. lang bei 40° gerührt. Man isoliert das erhaltene rote Reaktionsprodukt durch Filtration. Es ist in verdünnter Essigsäure löslich und entspricht der Formel

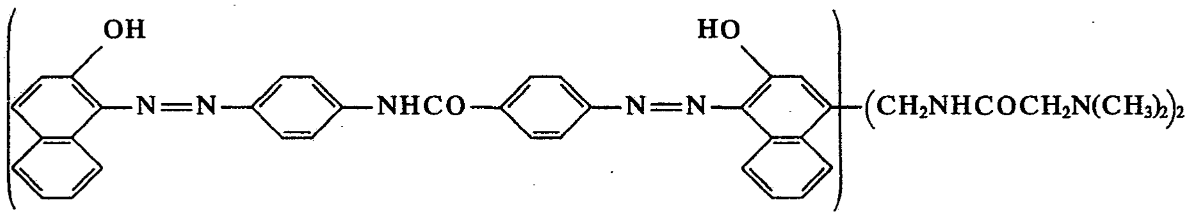

## Beispiel 35

Ersetzt man im obigen Beispiel die Dimethylaminlösung durch eine Trimethylaminlösung, so erhält man einen kationischen roten Farbstoff der Formel

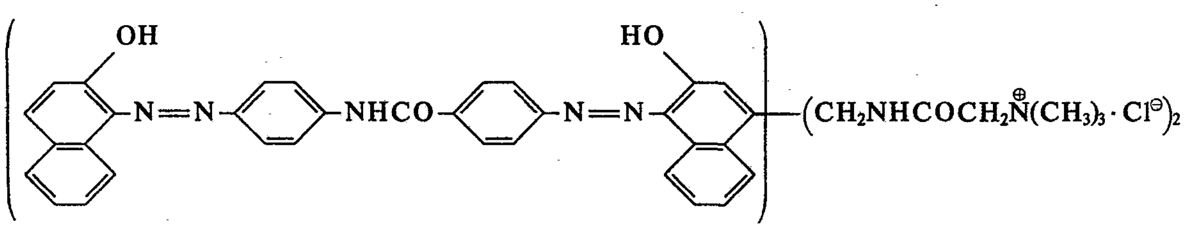

## Beispiel 36

Zu 500 T konz. Schwefelsäure wird ein Gemisch von 53,8 T des Farbstoffs gemäß Beispiel 1 und 18 T N-Methylol-N',N'-diäthyl-3-aminopropionamid bei 0–5° eingetragen und während 15 Stunden bei dieser Temperatur gerührt. Man fällt das Reaktionsprodukt der Formel

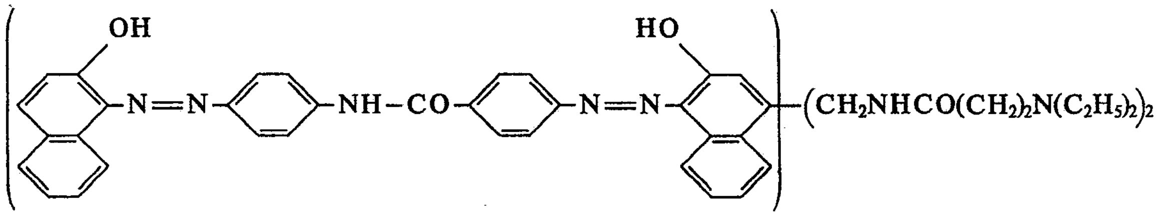

indem man den Ansatz auf Eis austrägt, das Produkt absaugt und mit Wasser nachwäscht. Der so erhaltene Farbstoff ist in verdünnter Ameisensäure löslich und färbt Papier in echten roten Nuancen, bei äußerst geringer Abwasserbelastung.

## Beispiel 37

48 T des Farbstoffes der Formel

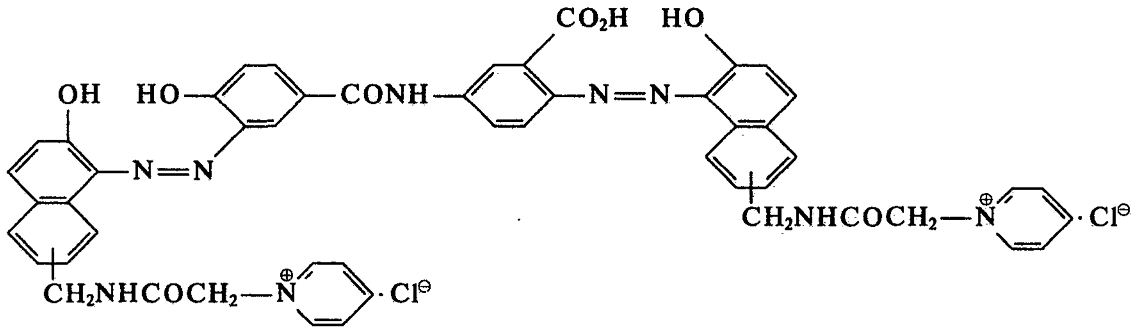

gemäß Beispiel 9 werden in 500 T Wasser gelöst und bei 80° mit 22 T Kupferacetat versetzt. Nach 4 Stunden wird der Kupferkomplex mit 30 T Kochsalz ausgesalzen und isoliert. Der Farbstoff färbt Papier in roten Nuancen mit guten Naßechtheiten.

Verwendet man im obigen Beispiel bei im übrigen analogem Vorgehen entsprechende Teile der in der nachstehenden Tabelle II aufgeführten Farbstoffe, so erhält man kupferhaltige Farbstoffkomplexe mit ähnlich guten färberischen Eigenschaften.

Tabelle II

| Beispiel | Teile | Farbstoff (R = $CH_2NHCOCH_2$— 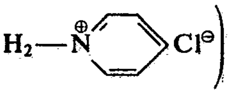) | Farbton auf Papier |
|---|---|---|---|
| 38 | 46 | 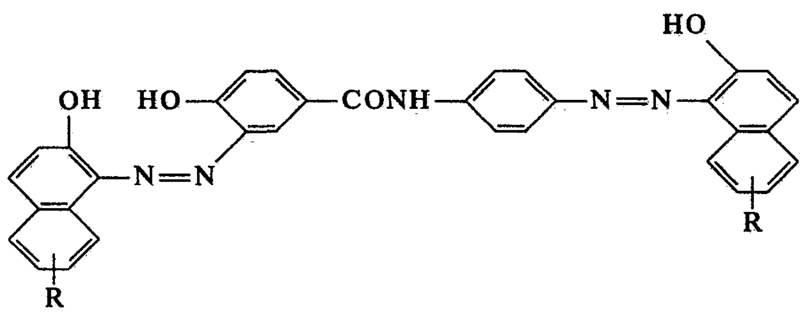 | rot |
| 39 | 49 | 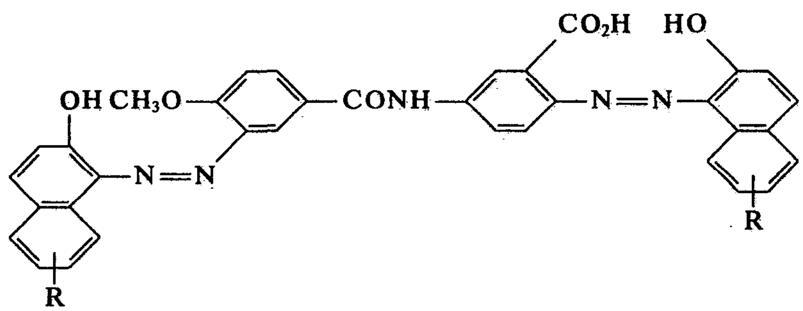 | rot |
| 40 | 49 | 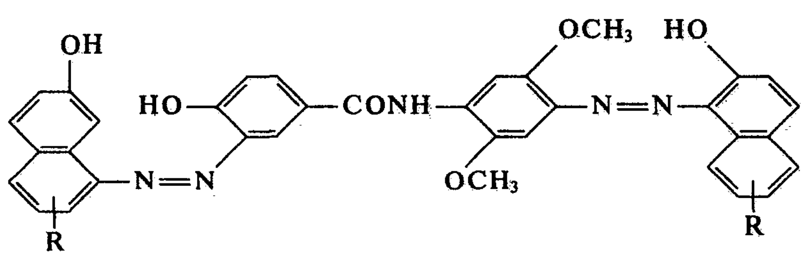 | violett |

Beispiel 41

Man vermischt 50 T chemisch gebleichte Buche Sulfit mit 50 T gebleichtem Sulfit RKN 15 (Mahlgrad 22° Schopper-Riegler = SR) und 2 T des Farbstoffes der Formel

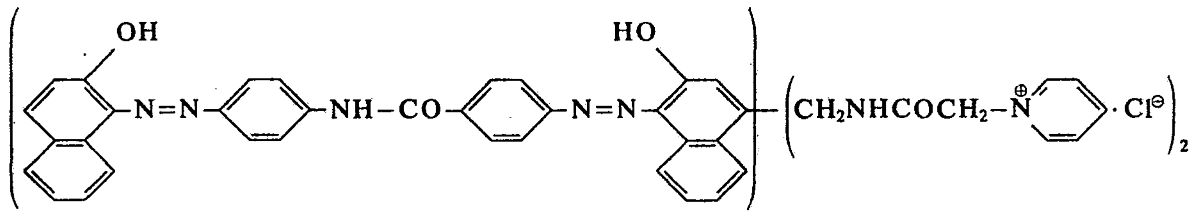

in Wasser (pH 6, Wasserhärte 10 d °H, Temperatur 20°, Flottenverhältnis 1:40). Nach 15minütigem Rühren werden Papierblätter auf einem Frank-Blattbildner hergestellt.

Das Papier ist in einer sehr intensiven Rotnuance gefärbt. Das Abwasser ist farblos. Der Ausziehgrad erreicht 100%.

Beispiel 42

Es wird eine Papierbahn aus gebleichtem Buche-Sulfit (22° SR) auf einer kontinuierlich arbeitenden Labor-Papiermaschine hergestellt. Zehn Sekunden vor dem Stoffauflauf wird eine wäßrige Lösung des Farbstoffes der Formel

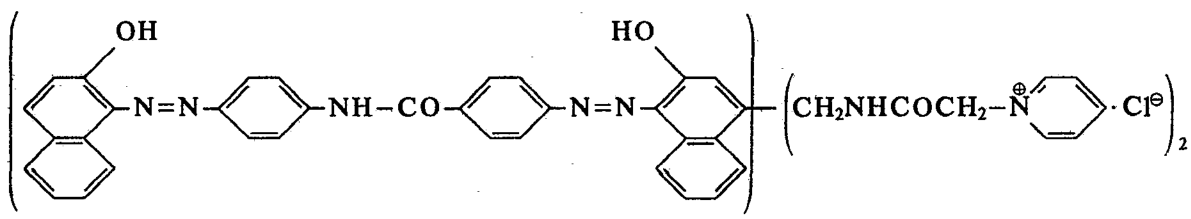

unter starker Turbulenz dem Dünnstoff kontinuierlich zudosiert (0,5%ige Färbung, Flottenverhältnis 1:400, Wasserhärte 10 d °H, pH 6, Temperatur 20°).

Es entsteht auf der Papierbahn eine egal gefärbte Rotnuance von mittlerer Intensität, die gut naßecht ist. Das Abwasser ist farblos.

**Patentansprüche**

1. Von Sulfonsäuregruppen freie, metallfreie oder metallhaltige Azofarbstoffe der Formel II

$$(X - N = N - Y - N = N - X)(CH_2 - NH - CO - W - Q)_n \qquad (II)$$

worin bedeuten:

X unabhängig voneinander eine Kupplungskomponente der Formel

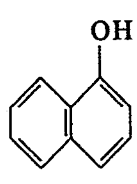

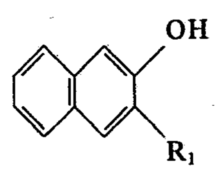

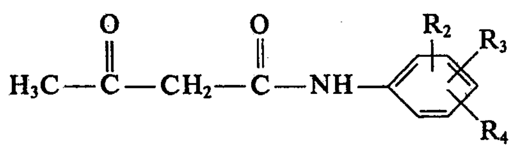

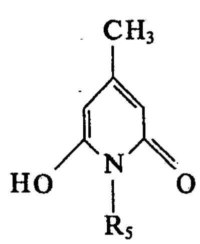

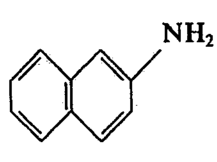

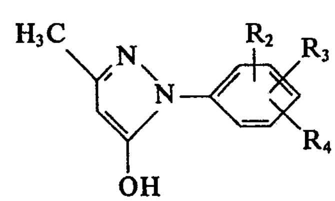

oder 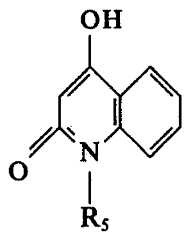

wobei die Substituenten $R_1$ bis $R_5$ die folgende Bedeutung haben:

$R_1$ Wasserstoff oder ein Rest der Formel

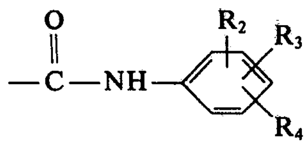 oder 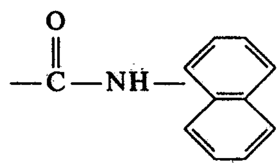

$R_2$, $R_3$ und $R_4$ Wasserstoff, Alkyl ($C_1 - C_4$), Alkoxy ($C_1 - C_4$), Phenoxy, Halogen, CN, $NO_2$ oder ein heterocyclischer Rest und

$R_5$ Wasserstoff, Phenyl oder Alkyl ($C_1 - C_4$), gegebenenfalls substituiert durch Hydroxy oder Phenyl; und

Y ein zweiwertiges Brückenglied der Formel

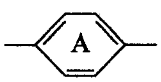 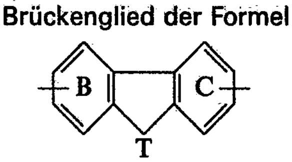 (mit M gleich N, S, O oder $CH_2$)

[H, Alkyl ($C_1 - C_4$), Alkylcarbonyl ($C_1 - C_4$)]

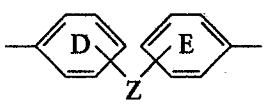 oder 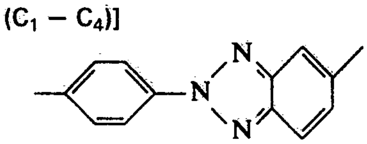

worin die Phenylreste A bis E ein oder mehrmals durch Alkyl ($C_1 - C_4$), Alkoxy ($C_1 - C_4$), Phenoxy, CN, Halogen, Nitro, OH oder COOH substituiert sein können, wobei die Anzahl an Carboxylgruppen kleiner ist, als die Zahl für n, Z die direkte Bindung oder einen zweiwertigen Rest

W eine Alkylengruppe mit 1 bis 3 C-Atomen oder eine Gruppe der Formel

$-NH(CH_2)_{1-3}-$,

Q einen basischen oder quaternierten Aminorest der Formel

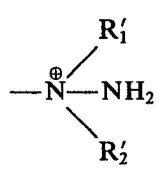 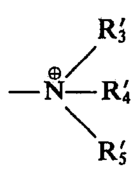 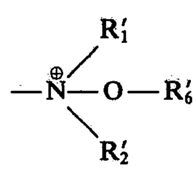 oder 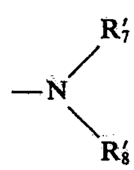

worin bedeutet

$R'_1$ bis $R'_4$ unabhängig voneinander einen Alkylrest ($C_1 - C_4$), der gegebenenfalls durch eine Hydroxylgruppe substituiert ist,

$R'_5$ und $R'_6$ unabhängig voneinander einen Alkylrest ($C_1 - C_4$),

$R'_7$ Wasserstoff, Alkyl ($C_1 - C_4$) gegebenenfalls durch Hydroxyl substituiert, Cyclohexyl gegebenenfalls durch 1 bis 3 Methylgruppen substituiert oder einen Phenylrest,

$R'_8$ Alkyl ($C_1 - C_4$) gegebenenfalls durch Hydroxyl substituiert, oder die Reste $R'_1$ oder $R'_2$ oder die Reste $R'_3$ und $R'_4$ oder die Reste $R'_7$ und $R'_8$ bilden zusammen mit dem gemeinsamen N-Atom einen Pyrrolidin-, Piperidin-, Morpholin- oder Piperazinring und die Reste $R'_3$, $R'_4$ und $R'_5$ mit dem gemeinsamen N-Atom einen Pyridiniumring oder einen 1,4-Diazabicyclo[2.2.2]-octanrest und

n die Zahlen 1 bis 4 und

für den Fall, daß Q eine quaternäre Aminogruppe ist, die anorganischen und organischen Salze hiervon.

2. Azofarbstoffe gemäß Anspruch 1, dadurch gekennzeichnet, daß der Rest Q eine quaternäre Aminogruppe bedeutet.

3. Azofarbstoffe gemäß Anspruch 1, dadurch gekennzeichnet, daß n die Zahl 2 bedeutet.

4. Azofarbstoffe gemäß Anspruch 1, dadurch gekennzeichnet, daß W $-CH_2-$ oder $-NHCH_2-$ ist.

5. Azofarbstoffe gemäß den Ansprüchen 1 bis 4, dadurch gekennzeichnet, daß der zweiwertige Rest Z eine der folgenden Bedeutungen hat:

$SO_2-NH-$ 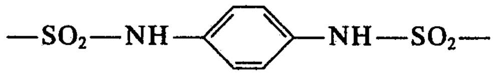

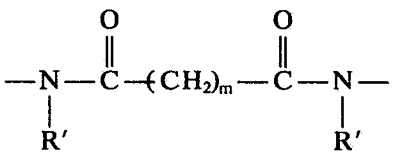 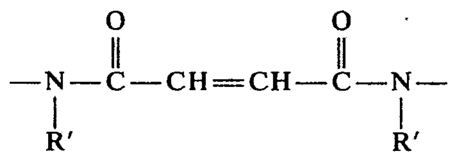

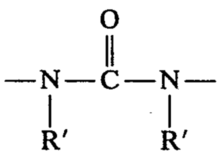 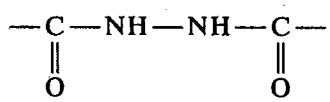

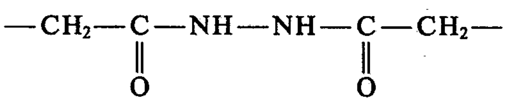

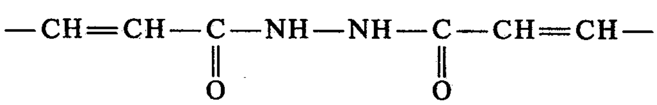 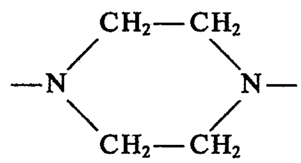

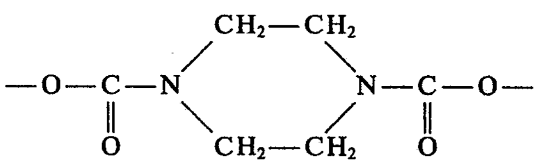 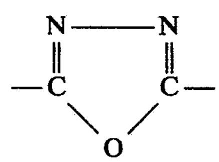 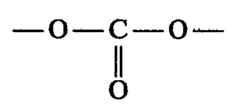

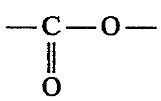 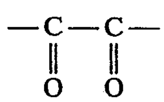 $-O(CH_2)_m-O-$ 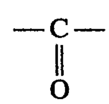

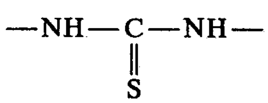 $-S-$ $-O-$ $-CH=CH-$ $-S-S-$

$-SO_2-$ $-NH-$ 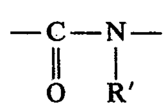 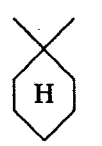

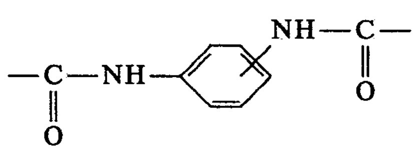 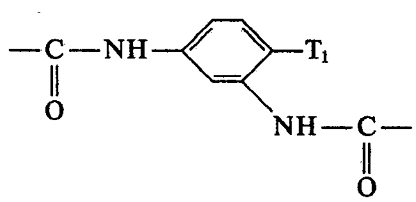

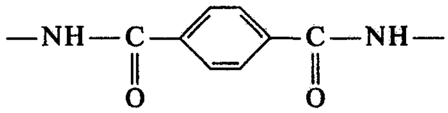
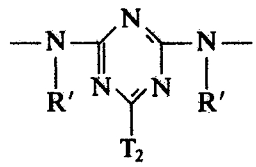
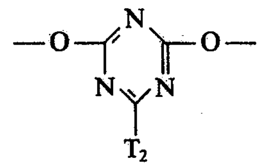

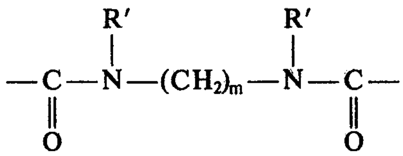
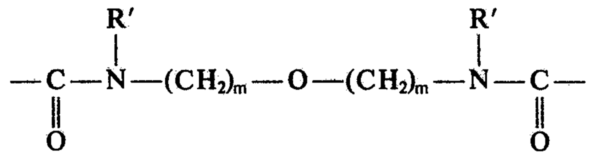

$—N=N—$ $—(CH_2)_m—$

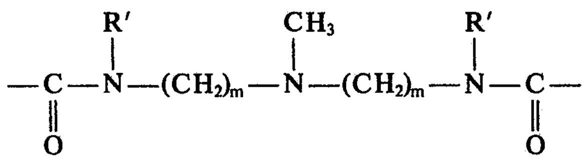

oder

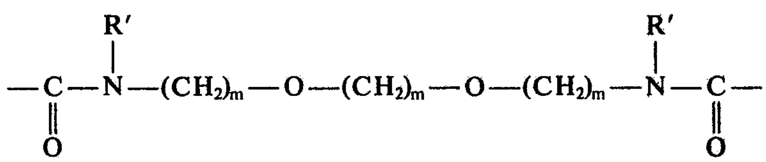

worin bedeutet

R' Wasserstoff oder Alkyl ($C_1 - C_4$),
$T_1$ Halogen, Alkyl ($C_1 - C_4$) oder Alkoxy ($C_1 - C_4$),
$T_2$ Halogen, $- NHCH_2CH_2OH$ oder $- N(CH_2CH_2OH)_2$ und
m die Zahlen 1 bis 4.

6. Azofarbstoffe gemäß Anspruch 1, dadurch gekennzeichnet, daß die beiden Symbole X jeweils die gleichen Kupplungskomponenten bedeuten.

7. Azofarbstoffe gemäß Anspruch 1, dadurch gekennzeichnet, daß X eine Kupplungskomponente der Formel

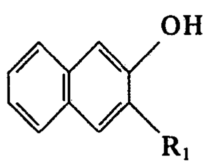

bedeutet, wobei der Rest $R_1$ die in Anspruch 1 angegebene Bedeutung hat.

8. Azofarbstoffe gemäß Anspruch 1, dadurch gekennzeichnet, daß Y ein zweiwertiges Brückenglied der Formel

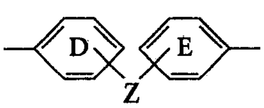

bedeutet, worin Z' eine direkte Bindung ist oder eine der folgenden Bedeutungen hat:

$—N=N—$ $—NH—$ $—NH—CO—NH—$ $—SO_2—$

$—NH—CO—$ 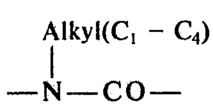 oder 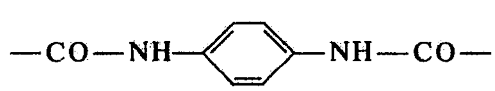

wobei die Phenylreste D und E unabhängig voneinander einen oder mehrere der folgenden Substituenten aufweisen können: Alkyl ($C_1 - C_4$), Alkoxy ($C_1 - C_4$), Halogen, Hydroxy oder Carboxyl.

9. Azofarbstoffe gemäß Anspruch 1, dadurch gekennzeichnet, daß Q ein über das Stickstoffatom gebundener Pyridiniumrest ist.

10. Verfahren zur Herstellung von Azofarbstoffen gemäß Anspruch 1, dadurch gekennzeichnet, daß man

a) in einen von Sulfonsäuregruppen freien gegebenenfalls metallisierbaren Azofarbstoff

$$[X - N = N - Y - N = N - X ] H_n$$

ein- bis viermal die Gruppe der Formel

$$- CH_2NHCO - W - Q'$$

einführt, worin Q' eine sek.- oder tert.-Aminogruppe bedeutet, die man gegebenenfalls quaterniert, wobei das Symbol W die unter Formel II angegebene Bedeutung hat, und den gegebenenfalls quaternierten Azofarbstoff gegebenenfalls in einen Metallkomplexfarbstoff überführt;

b) in einen Sulfonsäuregruppen freien, gegebenenfalls metallisierbaren Azofarbstoff

$$[X - N = N - Y - N = N - X ] H_n$$

ein- bis viermal die Gruppe der Formel

$$- CH_2NHCO - W - U$$

einführt und so zur Azoverbindung der Formel III gelangt

$$[X - N = N - Y - N = N - X ] ( CH_2NHCO - W - U)_n \quad (III)$$

worin U ein in ein Anion überführbarer Rest ist, der anschließend gegen den Aminorest Q substituiert wird, den man gegebenenfalls quaterniert, wobei die Symbole X, Y, W und n und der Rest Q die unter Formel II angegebene Bedeutung haben, und den gegebenenfalls quaternierten Azofarbstoff gegebenenfalls in einen Metallkomplexfarbstoff überführt; oder

c) in die Kupplungskomponente der Formel H — X die Gruppe der Formel

$$- CH_2NHCO - W - Q'$$

einführt, in der W die unter Formel II angegebene Bedeutung hat und Q' eine sek.- oder tert.-Aminogruppe ist, dabei die Kupplungskomponente der Formel

$$X - CH_2NHCO - W - Q'$$

erhält, die man mit einem tetrazotierten Diamin der Formel

$$H_2N - Y - NH_2$$

kuppelt, wobei die Symbole X und Y die unter Formel II angegebene Bedeutung haben, und den so erhaltenen Azofarbstoff gegebenenfalls quaterniert, und sofern im Molekül zur Komplexbildung befähigte Gruppen vorhanden sind, gegebenenfalls metallisiert.

11. Verwendung der gegebenenfalls quaternierten basischen Azofarbstoffe gemäß Anspruch 1 zum Färben und Bedrucken von Textilmaterialien, Papier, Leder und zur Bereitung von Tinten.

12. Verwendung der gegebenenfalls quaternierten basischen Azofarbstoffe gemäß Anspruch 1 zum Färben und Bedrucken von natürlichen und regenerierten Cellulosematerialien, vor allem Baumwolle und Viscose.

13. Verwendung der gegebenenfalls quaternierten basischen Azofarbstoffe gemäß Anspruch 1 zum Färben und Bedrucken von Papier aller Arten.

14. Verwendung der gegebenenfalls quaternierten basischen Azofarbstoffe gemäß Anspruch 1 zum Färben und Bedrucken von gebleichtem, ungeleimtem ligninfreiem Papier (Tissue).

15. Verwendung der gegebenenfalls quaternierten basischen Azofarbstoffe gemäß Anspruch 1 zum Färben und Bedrucken von Polyacrylnitrilmaterialien.

16. Die mit den gegebenenfalls quaternierten basischen Azofarbstoffen gemäß Anspruch 1 behandelten bzw. gefärbten und bedruckten Materialien.

**Claims**

1. A metal-free or metalliferous azo dye of the formula II which is devoid of sulfonic acid groups

$$(X - N = N - Y - N = N - X)\!\!-\!\!(CH_2 - NH - CO - W - Q)_n \qquad (II)$$

in which each of the symbols

X independently of the other is a coupling component of the formula

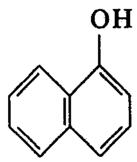

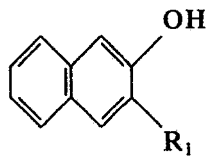

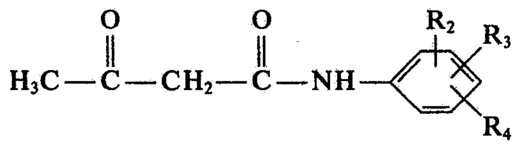

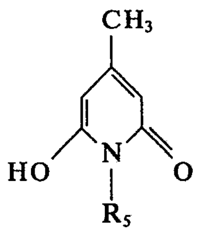

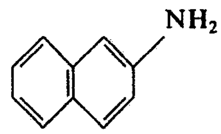

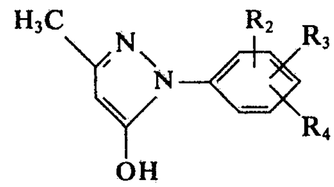

or

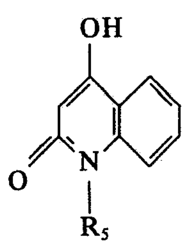

in which formulae

$R_1$ is hydrogen or a radical of the formula

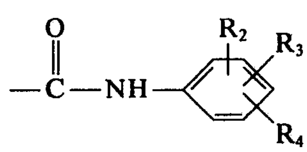

or

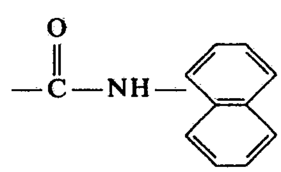

$R_2$, $R_3$ and $R_4$ are hydrogen, $C_1 - C_4$alkyl, $C_1 - C_4$alkoxy, phenoxy, halogen, CN, $NO_2$ or a heterocyclic radical and

$R_5$ is hydrogen, phenyl, or $C_1 - C_4$alkyl which is unsubstituted or substituted by hydroxy or phenyl; and

Y is a divalent bridge member of the formula

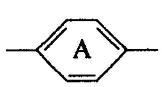

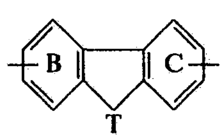

(where M is N, S, O or $CH_2$)

[H, $C_1 - C_4$alkyl or $C_1 - C_4$alkylcarbonyl]

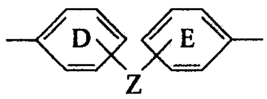

oder

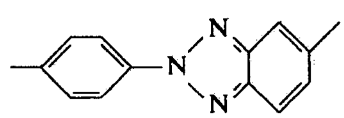

in which the phenyl radicals A to E can be monosubstituted or polysubstituted by $C_1-C_4$alkyl, $C_1-C_4$alkoxy, phenoxy, CN, halogen, nitro, OH or COOH, the number of carboxyl groups being less than n, and Z is a direct bond or a divalent radical,

W is an alkylene group having 1 to 3 carbon atoms or a group of the formula

$-NH(CH_2)_{1-3}-$

and

Q is a basic or quaternised amino radical of the formula

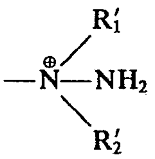
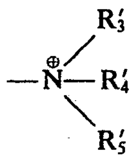
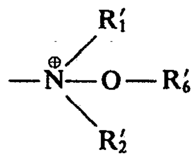
or
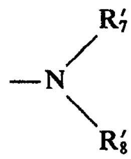

in which each of

$R'_1$ to $R'_4$ independently is a $C_1-C_4$alkyl radical which is unsubstituted or substituted by a hydroxyl group, each of

$R'_5$ and $R'_6$ independently is a $C_1-C_4$alkyl radical,

$R'_7$ is hydrogen, $C_1-C_4$alkyl which is unsubstituted or substituted by hydroxy, or is cyclohexyl which is unsubstituted or substituted by 1 to 3 methyl groups, or is a phenyl radical and

$R'_8$ is $C_1-C_4$alkyl which is unsubstituted or substituted by hydroxy, or the radicals $R'_1$ and $R'_2$, or the radicals $R'_3$ and $R'_4$, or the radicals $R'_7$ and $R'_8$, together with the common N atom, form a pyrrolidine, piperidine, morpholine or piperazine ring, or the radicals $R'_3$, $R'_4$ and $R'_5$, together with the common N atom, form a pyridinium ring or a 1,4-diazabicyclo[2.2.2]octane radical, and

n is a number from 1 to 4,

or, of Q is a quaternary amino group, an inorganic or organic salt thereof.

2. An azo dye according to claim 1, in which the radical Q is a quaternary amino group.
3. An azo dye according to claim 1, in which n is the number 2.
4. An azo dye according to claim 1, in which W is $-CH_2-$ or $-NHCH_2-$.
5. An azo dye according to any one of claims 1 to 4, in which the divalent radical Z is

$SO_2—NH—$

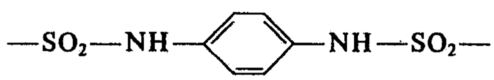

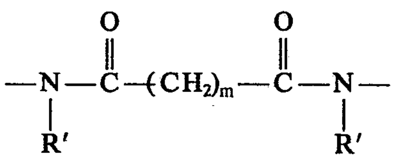
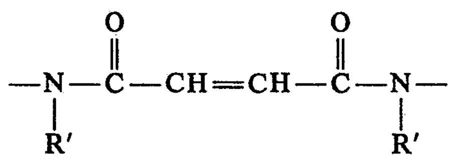

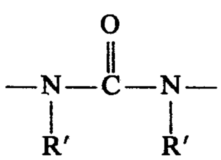
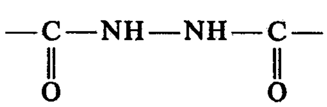

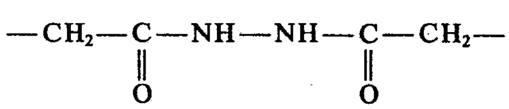

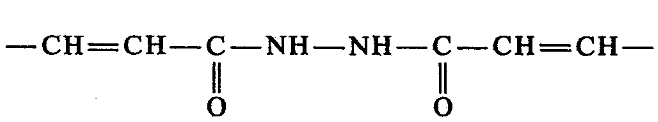
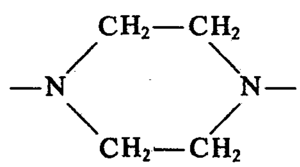

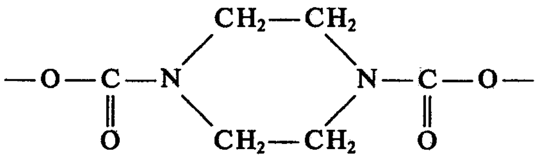 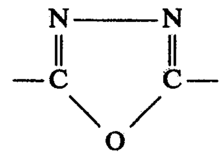 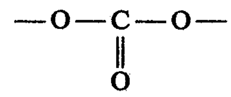

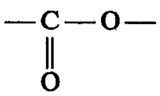 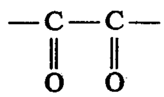 $-O(CH_2)_m-O-$ 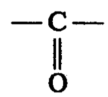

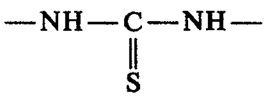 $-S-$ $-O-$ $-CH{=}CH-$ $-S-S-$

$-SO_2-$ $-NH-$ 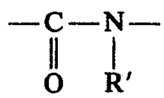 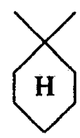

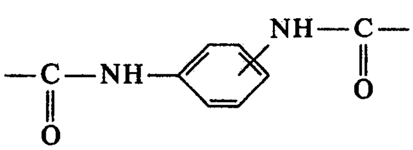 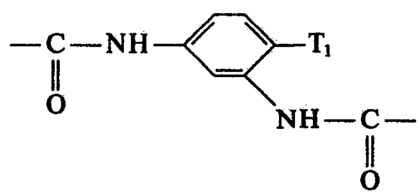

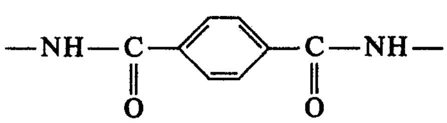 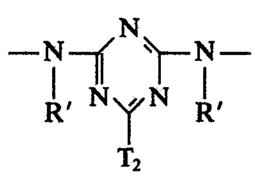 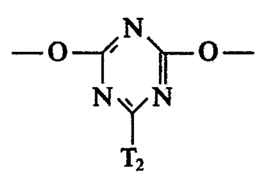

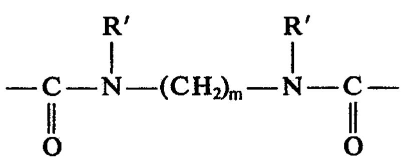 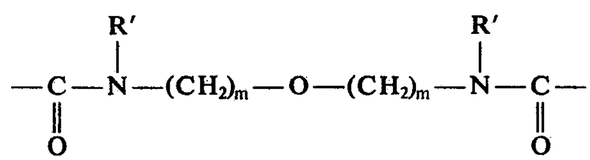

$-N{=}N-$ $-(CH_2)_m-$

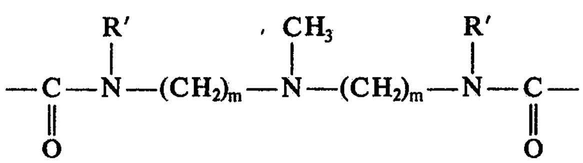 or

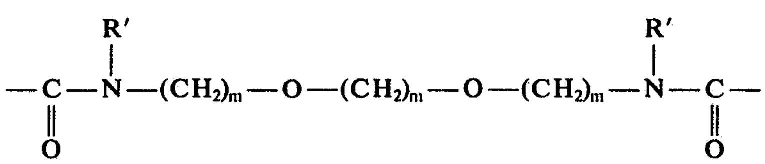

in which

R' is hydrogen or $C_1 - C_4$alkyl,
$T_1$ is halogen, $C_1 - C_4$alkyl or $C_1 - C_4$alkoxy,
$T_2$ is halogen, $-NHCH_2CH_2OH$ or $-N(CH_2CH_2OH)_2$ and
m is a number from 1 to 4.

6. An azo dye according to claim 1, in which each of the two symbols X is the same coupling component.

7. An azo dye according to claim 5, in which X is a coupling component of the formula

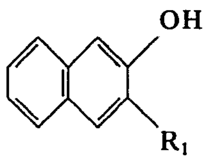

in which the radical $R_1$ is as defined in claim 1.

8. An azo dye according to claim 1, in which Y is a divalent bridge member of the formula

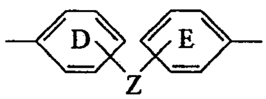

in which Z' is a direct bond or is

—N=N— —NH— —NH—CO—NH— $-SO_2-$

$C_1$ - $C_4$alkyl
|
—NH—CO— —N—CO— or —CO—NH— 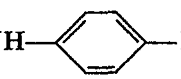 —NH—CO—

in which each of the phenyl radicals D and E independently of the other can carry one or more of the following substituents: $C_1 - C_4$alkyl, $C_1 - C_4$alkoxy, halogen, hydroxy or carboxy.

9. An azo dye according to claim 1, in which Q is a pyridinium radical bonded through the nitrogen atom.

10. A process for the preparation of an azo dye according to claim 1, which comprises

a) introducing one to four groups of the formula $-CH_2NHCO-W-Q'$, in which Q' is a secondary or tertiary amino group which is optionally quaternised and W is as defined for formula II, into a metal-free or metalliferous azo dye

$[X-N=N-Y-N=N-X]-H_n$

which is devoid of sulfonic groups, and, if desired, converting the quaternised or unquaternised azo dye into a metal complex dye;

b) introducing one to four groups of the formula

$-CH_2NHCO-W-U$

into a metal-free or metalliferous azo dye

$[X-N=N-Y-N=N-X]-H_n$

which is devoid of sulfonic groups to obtain the azo compound of the formula III

$$[X-N=N-Y-N=N-X]-(CH_2NHCO-W-U)_n \quad (III)$$

in which U is a radical which can be converted into an anion and is subsequently replaced by the amino radical Q which is optionally quaternised, and the symbols X, Y, W and n and the radical Q are as defined for formula I, and, if desired, converting the quaternised or unquaternised azo dye into a metal complex dye; or

c) introducing the group of the formula

$-CH_2NHCO-Q-Q'$

in which W is as defined for formula II and Q′ is a secondary or tertiary amino group, into the coupling component of the formula H − X to obtain the coupling component of the formula

$X-CH_2NHCO-W-Q'$

which is coupled with a tetrazotised diamine of the formula

$H_2N-Y-NH_2$

in which formulae the symbols X and Y are as defined for formula II, and, if desired, quaternising the azo dye so obtained, and, where groups which are capable of complex formation are present in the molecule, if desired, metallising said dye.

11. Use of a quaternised or unquaternised basic azo dye according to claim 1 for dyeing or printing textile materials, paper or leather or for the preparation of inks.

12. Use of quaternised or unquaternised basic azo dye according to claim 1 for dyeing or printing natural and regenerated cellulose materials, in particular cotton and viscose.

13. Use of a quaternised or unquaternised basic azo dye according to claim 1 for dyeing or printing all types of paper.

14. Use of a quaternised or unquaternised basic azo dye according to claim 1 for dyeing or printing bleached, unsized lignin-free paper (tissue).

15. Use of a quaternised or unquaternised basic azo dye according to claim 1 for dyeing or printing polyacrylonitrile materials.

16. A material treated, e.g. dyed or printed, with a quaternised or unquaternised basic azo dye according to claim 1.

**Revendications**

1. Colorants azoïques exempts de groupes sulfonés, selon métallifères ou métallifères, de formule II

$$(X-N=N-Y-N=N-X)\text{—}(CH_2-NH-CO-W-Q)_n \qquad (II)$$

dans laquelle: les deux

X représentent, indépendamment l'un de l'autre, un composant de copulation de formules

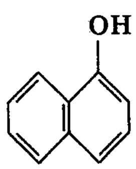
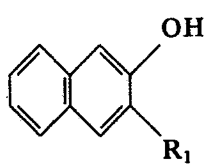
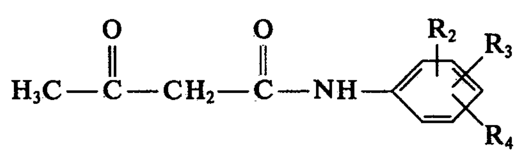
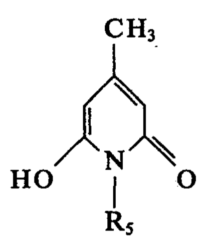
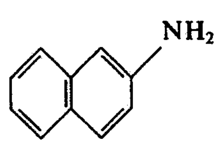
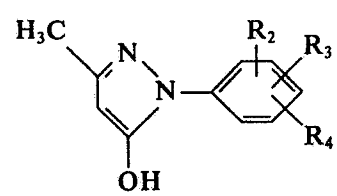

ou 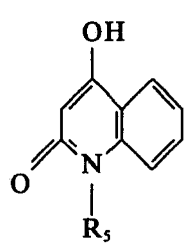

dans laquelle les substituants $R_1$ à $R_5$ ont les significations suivantes:
$R_1$ représente un atome d'hydrogène ou un radical de formules

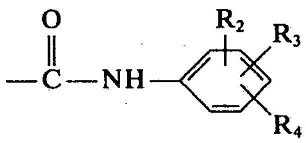

ou

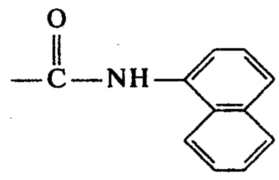

$R_2$, $R_3$ et $R_4$ représentent chacun un atome d'hydrogène, un groupe alkyle en $C_1 - C_4$, alcoxy en $C_1 - C_4$, phénoxy, halogèno, CN, $NO_2$ ou un radical hétérocyclique, et
$R_5$ représente un atome d'hydrogène, un groupe phényle ou alkyle en $C_1 - C_4$ éventuellement substitués avec un groupe hydroxyle ou phényle; et
Y représente une chaîne pontale bivalente de formules

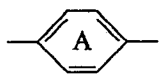

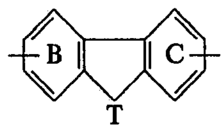

(avec M égal N, S, O ou $CH_2$)

[H, Alkyle en $C_1 - C_4$ Alkylcarbonyle en $C_1 - C_4$]

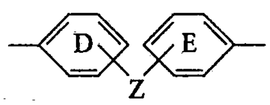

ou

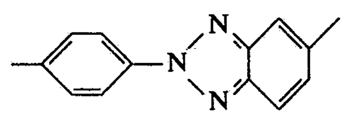

dans lesquelles les groupes phényle A à E peuvent être substitués une ou plusieurs fois avec des groupes alkyle en $C_1 - C_4$, alcoxy en $C_1 - C_4$, phénoxy, CN, halogène, nitro, OH ou COOH, où la quantité de groupes carboxyliques est inférieure au nombre représenté par n, Z étant la liaison directe ou un radical bivalent;
W représente un groupe alkylène ayant de 1 à 3 atomes de carbone ou un groupe de formule

$- NH(CH_2)_{1-3} -$,

Q représente un groupe amino basique ou quaternaire de formules

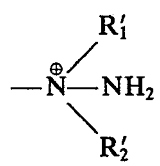

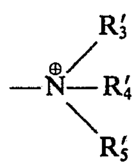

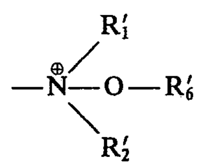

ou

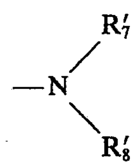

dans lesquelles:

$R'_1$ à $R'_4$ représentent, indépendamment l'un de l'autre, un groupe alkyle an $C_1 - C_4$ qui est éventuellement substitué avec un groupe hydroxyle;
$R'_5$ et $R'_6$ représentent, indépendamment l'un de l'autre, un groupe alkyle en $C_1 - C_4$;
$R'_7$ représente un atome d'hydrogène, un groupe alkyle en $C_1 - C_4$ éventuellement substitué avec un radical hydroxyle, un groupe cyclohexyle éventuellement substitué avec 1 à 3 radicaux méthyle ou un groupe phényle;
$R'_8$ représente un groupe alkyle en $C_1 - C_4$ éventuellement substitué avec un reste hydroxyle ou, les radicaux $R'_1$ et $R'_2$ ou les radicaux $R'_3$ et $R'_4$ ou les radicaux $R'_7$ et $R'_8$ forment ensemble avec l'atome d'azote commun un noyau pyrrolidine, pipéridine, morpholine ou pipérazine, et les radicaux $R'_3$, $R'_4$ et $R'_5$ forment ensemble avec l'atome d'azote commun un noyau pyridinium ou un radical 1,4-diazabicyclo[2,2,2]-octane, et
n est un nombre de 1 à 4 et,

dans le cas où Q est un groupe amino quaternaire, les sels minéraux et organiques de ces colorants.

2. Colorants azoïques selon la revendication 1, caractérisés par le fait que le radical Q représente un groupe amino quaternaire.

3. Colorants azoïques selon la revendication 1, caractérisés par le fait que n représente le nombre 2.

4. Colorants azoïques selon la revendication 1, caractérisés par le fait que W est $-CH_2-$ ou $-NHCH_2-$.

5. Colorants azoïques selon la revendication 1 à 4, caractérisés par le fait que le radical bivalent Z correspond à l'une des formules suivantes:

$SO_2—NH—$ 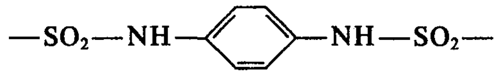

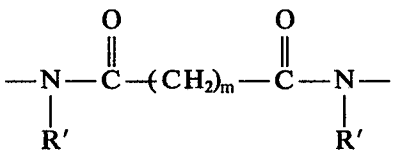 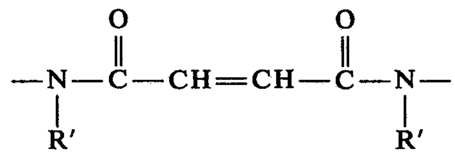

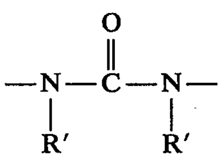 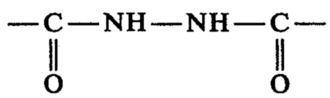

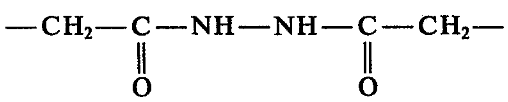

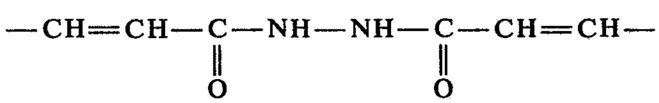 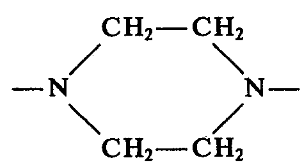

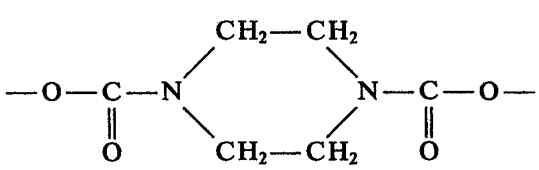 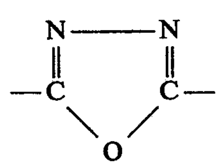 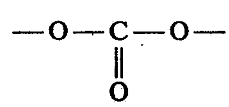

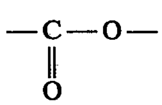 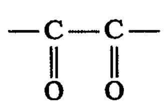 $—O(CH_2)_m—O—$ 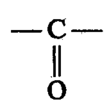

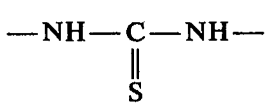 $—S—$ $—O—$ $—CH{=}CH—$ $—S—S—$

$—SO_2—$ $—NH—$ 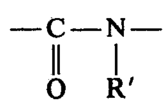 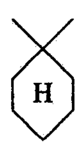

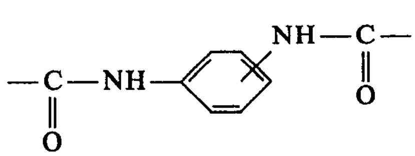 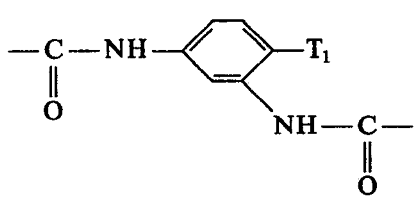

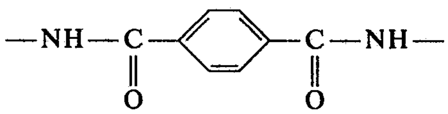 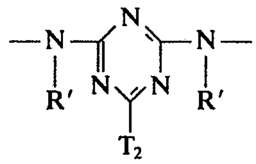 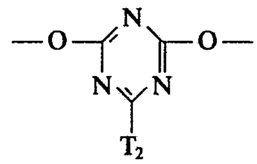

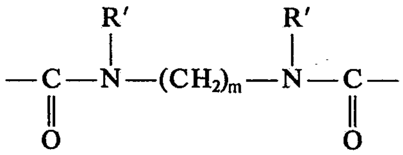 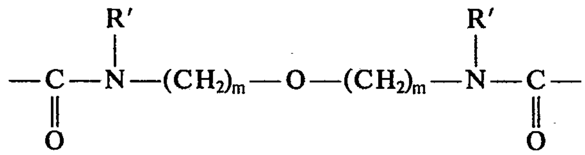

$—N{=}N—$ $—(CH_2)_m—$

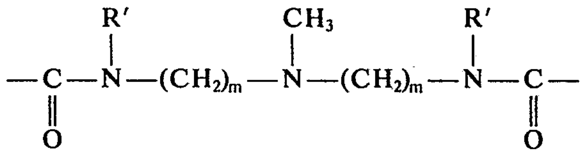 or

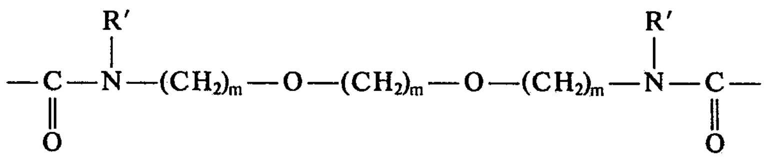

dans lesquelles

$R'_1$ représente un atome d'hydrogène ou un groupe alkyle en $C_1 - C_4$;
$T_1$ représente un halogène, un groupe alkyle en $C_1 - C_4$ ou alcoxy en $C_1 - C_4$;
$T_2$ représente un halogène, $- NHCH_2CH_2OH$ ou $- N(CH_2CH_2OH)_2$ et
m sont des nombres compris entre 1 et 4.

6. Colorants azoïques selon la revendication 1, caractérisés par le fait que les deux symboles X représentent chacun les mêmes composants de copulation.

7. Colorants azoïques selon la revendication 1, caractérisés par le fait que X représente un composant de copulation de formule

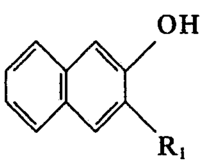

dans laquelle le radical $R_1$ a la signification donnée dans la revendication 1.

8. Colorants azoïques selon la revendication 1, caractérisés par le fait que Y représente une chaîne pontale bivalente de formule

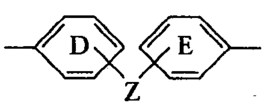

dans laquelle Z' est une liaison directe ou bien a l'une des significations suivantes:

$—N{=}N—$ $—NH—$ $—NH—CO—NH—$ $—SO_2—$

$—NH—CO—$ 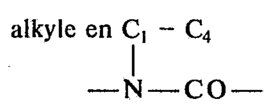 ou 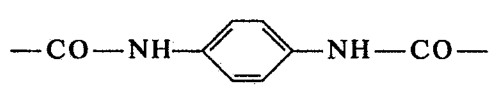

dans laquelle les radicaux phényle D et E peuvent présenter, indépendamment l'un de l'autre, un ou plusieurs des substituants suivants: groupes alkyle en $C_1 - C_4$, alcoxy en $C_1 - C_4$, halogèno, hydroxyle ou carboxyle.

9. Colorants azoïques selon la revendication 1, caractérisés par le fait que Q est un radical pyridinium fixé par l'intermédiaire de l'atome d'azote.

10. Procédé pour la préparation de colorants azoïques selon la revendication 1, caractérisé par le fait

a) que l'on introduit dans un colorant azoïque

$[X - N = N - Y - N = N - X] - H_n$

exempt de groupes sulfonés, éventuellement métallable, une à quatre fois le groupe de formule

$- CH_2NHCO - W - Q'$,

dans laquelle Q' représente un groupe amino secondaire ou tertiaire que l'on rend éventuellement quaternaire, le symbole W ayant la signification donnée sous la formule II, et que l'on transforme éventuellement le colorant azoïque éventuellement rendu quaternaire en un colorant à complexe métallifère;

b) que l'on introduit dans un colorant azoïque

$[X - N = N - Y - N = N - X] - H_n$

exempt de groupes sulfonés, éventuellement métallable, une à quatre fois le groupe de formule

$- CH_2NHCO - W - U$

et que l'on arrive ainsi au composé azoïque de formule

$$[X - N = N - Y - N = N - X] - (CH_2NHCO - W - U)_n \qquad (III)$$

dans laquelle U est un résidu transformable en un anion, qui est remplacé ensuite par le radical amino Q, qui est éventuellement rendu quaternaire, les symboles X, Y, W et n et le radical Q ayant les significations données sous la formule II, et que l'on transforme éventuellement le colorant azoïque — éventuellement rendu quaternaire en un colorant à complexe métallifère; ou

c) que l'on introduit dans le composant de copulation de formule H — X le groupe de formule

$- CH_2NHCO - W - Q'$,

dans laquelle W a la signification donnée sous la formule II et Q' est un groupe amino secondaire ou tertiaire, ce qui conduit ainsi au composant de copulation de formule

$X - CH_2NHCO - W - Q'$

que l'on copule sur une diamine tétra-azotée de formule

$H_2N - Y - NH_2$,

les symboles X et Y ayant les significations données sous la formule II, et que, éventuellement, on rend quaternaire le colorant azoïque ainsi obtenu, et auquel on fixe éventuellement un métal dans la mesure où des groupes susceptibles de complexation sont présents dans la molécule.

11. Utilisation des colorants azoïques basiques éventuellement rendus quaternaires, selon la revendication 1, pour la teinture et l'impression de matériaux textiles, papier, cuir, et pour la préparation d'encres.

12. Utilisation des colorants azoïques basiques éventuellement rendus quaternaires, selon la revendication 1, pour la teinture et l'impression de matériaux de cellulose naturelle et de cellulose régénérée, avant tout du coton et de viscose.

13. Utilisation des colorants azoïques basiques éventuellement rendus quaternaires, selon la revendication 1, pour la coloration et l'impression de papiers de toutes sortes.

14. Utilisation des colorants azoïques basiques éventuellement rendus quaternaires, selon la revendication 1, pour la coloration et l'impression de papier blanchi, non encollé, sans lignine (papier mousseline).

15. Utilisation des colorants azoïques basiques éventuellement rendus quaternaires, selon la revendication 1, pour la teinture et l'impression de matériaux en polyacrylonitrile.

16. Les matériaux traités, teints ou imprimés avec les colorants azoïques basiques éventuellement rendus quaternaires, selon la revendication 1.